(19) Europäisches Patentamt
European Patent Office
Office européen des brevets

(11) **EP 4 054 312 B1**

(12) **EUROPÄISCHE PATENTSCHRIFT**

(45) Veröffentlichungstag und Bekanntmachung des Hinweises auf die Patenterteilung:
**31.12.2025 Patentblatt 2026/01**

(21) Anmeldenummer: **20803813.3**

(22) Anmeldetag: **06.11.2020**

(51) Internationale Patentklassifikation (IPC):
**A01D 43/00** (2006.01) **A01D 75/20** (2006.01)
**A01M 29/34** (2011.01)

(52) Gemeinsame Patentklassifikation (CPC):
**A01D 75/20; A01M 29/34**

(86) Internationale Anmeldenummer:
**PCT/EP2020/081388**

(87) Internationale Veröffentlichungsnummer:
**WO 2021/089849 (14.05.2021 Gazette 2021/19)**

(54) **GERÄTEANORDNUNG, ARBEITSFAHRZEUG UND VERFAHREN INSBESONDERE FÜR DIE GRÜNPFLEGE, DAS MÄHEN, DIE BODENBEARBEITUNG, ODER DIE RAU- ODER KÖRNERFRUCHTERNTE**

ARRANGEMENT OF EQUIPMENT, WORKING VEHICLE AND METHOD IN PARTICULAR FOR MAINTAINING GREEN AREAS, MOWING, SOIL TILLAGE, OR HARVESTING RAW OR CEREAL CROPS

AGENCEMENT D'ÉQUIPEMENT, VÉHICULE DE TRAVAIL ET PROCÉDÉ EN PARTICULIER POUR MAINTENIR DES ZONES VERTES, FAUCHAGE, TRAVAIL DU SOL, OU RÉCOLTE DE CULTURES BRUTES OU CÉRÉALIÈRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2019 DE 102019130271**

(43) Veröffentlichungstag der Anmeldung:
**14.09.2022 Patentblatt 2022/37**

(60) Teilanmeldung:
**25212339.3**

(73) Patentinhaber: **Fischer Maschinenbau GmbH & Co. KG**
**74376 Gemmrigheim (DE)**

(72) Erfinder:
• **BEUTEL, Reiner**
**71634 Ludwigsburg (DE)**
• **REBER, Dieter**
**74376 Gemmrigheim (DE)**

(74) Vertreter: **Gauss, Nikolai**
**Pfiz/Gauss Patentanwälte PartmbB**
**Tübingerstraße 26**
**70178 Stuttgart (DE)**

(56) Entgegenhaltungen:
DE-U1- 202015 006 431    US-A1- 2015 096 277
US-A1- 2016 014 953

**Beschreibung**

Die Erfindung betrifft eine Geräteanordnung mit einem Arbeitsgerät, das ein Maschinenwerkzeug für einen Arbeitsgang aus der Gruppe Grünpflege, Mulchen, Mähen, Bodenbearbeitung, Raufutterernte, Körnerfruchternte aufweist, das einen in einer Arbeitsrichtung durch einen Arbeitsbereich bewegbaren Wirkabschnitt hat. Die Geräteanordnung enthält ein Blasgerät zum Bereitstellen von Blasluft in einem dem Wirkabschnitt des Maschinenwerkzeugs in der Arbeitsrichtung vorgelagerten Abschnitt des Arbeitsbereichs.

Darüber hinaus betrifft die Erfindung ein Arbeitsfahrzeug mit einer derartigen Geräteanordnung sowie ein Verfahren zum Ausführen eines Arbeitsgangs aus der Gruppe Grünpflege, Mähen, Mulchen, Bodenbearbeitung, Raufutterernte, Körnerfruchternte, Spritzen, bei dem ein Maschinenwerkzeug, das einen Wirkabschnitt hat, in einer Arbeitsrichtung durch einen Arbeitsbereich bewegt wird.

Für die Grünpflege, das Mulchen, das Mähen, die Bodenbearbeitung, die Raufutterernte, die Körnerfruchternte werden in der Landwirtschaft, im Wein- und Obstbau oder in der professionellen, der kommunalen aber auch in der privaten Grünpflege Arbeitsgeräte eingesetzt, die insbesondere an Fahrzeugen aufgenommen sind und die eine Maschinenwerkzeugeinrichtung mit einem angetriebenen Maschinenwerkzeug enthalten, das Pflanzen oder Pflanzenteile abschneidet und/oder zerkleinert oder das Pflanzen und Pflanzenreste zerkleinert und dabei in Böden einarbeitet.

Um bei der Grünpflege und der Bodenbearbeitung aber auch bei der Ernte oder beim Spritzen ein präzises und gleichzeitig rationelles Bearbeiten von großen Flächen zu ermöglichen, besteht das Erfordernis, Arbeitsgeräte in einer Arbeitsrichtung durch einen Arbeitsbereich zu bewegen und Maschinenwerkzeuge in den Maschinenwerkzeugeinrichtungen darin wie z. B. Zinkenrotoren, Messerträger mit Messerwerkzeugen, Rotorwellen mit daran aufgenommenen Werkzeugen für das Zerkleinern von Grüngut und/oder Schnittholz und/oder Stroh sowie Maisstroh mit hohen Bewegungsraten und/oder hohen Umdrehungszahlen zu betreiben.

Hohe Bewegungsraten und/oder hohe Umdrehungszahlen von Maschinenwerkzeugen, die bei der Grünpflege, beim Mulchen, beim Mähen, bei der Bodenbearbeitung, bei der Raufutterernte oder der Körnerfruchternte aber auch beim Spritzen in kurzer Zeit über große Flächen bewegt werden, können zur Folge haben, dass erhebliche Mengen von Kleinlebewesen wie z. B. Insekten, insbesondere Schmetterlinge und Bienen, aber auch Spinnen und kleine Säugetiere oder Vögel zu Schaden kommen.

Um Kleinlebewesen bei der Grünpflege, insbesondere beim Mähen vor Maschinenwerkzeugen zu schützen, ist der Einsatz von Abstreifrechen und Abstreifkämmen bekannt, die nicht nur schwierig zu reinigen, sondern auch äußerst reparaturanfällig sind. Für viele Kleinlebewesen bieten jedoch solche Abstreifrechen und Abstreifkämme keinen zufriedenstellenden Schutz. Das Mähen mit Doppelmesserbalken, die das Mähgut nicht zerkleinern und außerdem insbesondere im Vergleich zu Kreiselmähwerken oder Mulchern weniger effektiv sind, schützt zwar bestimmte Kleinlebewesen, die sich nicht in Bodennähe aufhalten. Auch Doppelmesserbalken können jedoch Kleinlebewesen schädigen, wenn sie mit dem Doppelmesserbalken in Kontakt geraten.

Die US 2015/0096277 A1 beschreibt einen Rasenmäher mit einem Sichelmähwerk, das ein oder zwei Schneidmesser hat, die in einer Arbeitsebene rotieren. Der Rasenmäher weist ein Blasgerät auf, das ein Gebläse enthält, an das ein trichterförmiger Blasluftkanal mit einer Austrittsöffnung für Blasluft angeschlossen ist. Das Blasgerät dient hier für das Erzeugen von Blasluft, die vor dem Sichelmähwerk mit einer in Bezug auf dessen Arbeitsebene schräg von oben nach unten verlaufenden Strömungsrichtung durch die Austrittsöffnung geführt wird, wobei diese Strömungsrichtung in einer zu der Arbeitsebene senkrechten Ebene liegt. Mittels der Blasluft können hier Halme und Zweige des vor dem Sichelmähwerk angeordneten Grünguts derart in Bewegung versetzt werden, dass Kleintiere und Bienen veranlasst werden, sich aus dem Abschnitt des Arbeitsbereichs des Rasenmähers selbsttätig herauszubewegen, der dem Wirkabschnitt des Sichelmähwerks in der Arbeitsrichtung gesehen vorgelagert ist.

Aus der US 8,579,058 B1 ist ein selbstfahrender Rasenmäher mit einem Sichelmähwerk bekannt, der ein Blasgerät mit einem Gebläse für das Erzeugen von Blasluft enthält, um den zu mähenden Rasen von Laub freizublasen. Das Blasgerät hat hier ein mit dem Antrieb des Sichelmähwerks gekoppeltes Gebläse und weist einen flexiblen Blasluftkanal mit einer Austrittsöffnung an einer Düse auf. Die Austrittsöffnung mit der Düse ist an dem Rasenmäher verlagerbar. Sie kann über dem Abschnitt des Arbeitsbereichs des Rasenmähers bewegt werden, der dem Wirkabschnitt des Sichelmähwerks in der Arbeitsrichtung gesehen vorgelagert ist. Damit ist es möglich, die in dem Blasgerät erzeugte Blasluft mit einer in Bezug auf die Arbeitsebene des Sichelmähwerks schräg von oben nach unten verlaufenden Strömungsrichtung durch die Austrittsöffnung in einen Teilbereich des dem Wirkabschnitt des Sichelmähwerks vorgelagerten Abschnitts des Arbeitsbereichs des Rasenmähers zu richten.

In der DE 20 2015 006 431 U1 ist ein Rasenmäher mit einer Insektenschutzeinrichtung angegeben, die Druckluft aus Düsen bereitstellt, um damit Insekten zu vertreiben.

Aufgabe der Erfindung ist es, insbesondere eine umweltfreundliche und dabei rationelle Grünpflege und Bodenbearbeitung sowie Rau- oder Körnerfruchternte aber auch das Spritzen von Pflanzen für die Schädlingsbekämpfung zu ermöglichen, bei der Kleinlebewesen, insbesondere Insekten geschont werden.

Diese Aufgabe wird durch eine in den unabhängigen Ansprüchen angegebene Geräteanordnung, ein in den unabhängigen Ansprüchen angegebenes Arbeitsfahrzeug und ein in den unabhängigen Ansprüchen angegebenes Verfahren gelöst. Vorteilhafte Ausführungsformen und Weiterbildungen der Erfindung sind in den abhängigen Ansprüchen angegeben.

Die Erfindung beruht auf dem Gedanken, Kleinlebewesen, insbesondere Insekten aus dem vor dem Wirkabschnitt eines Maschinenwerkzeugs liegenden Abschnitt des Arbeitsbereichs bei der Grünpflege, der Bodenbearbeitung aber auch der Rau- oder Körnerfruchternte mittels eines gasförmigen Fluidstroms zu entfernen, indem diese weggeblasen werden. Der gasförmige Fluidstrom für das Wegblasen der Kleinlebewesen kann dabei mittels eines Blasgeräts bereitgestellt werden, das grundsätzlich für das Blasen von Laub geeignet ist.

Eine erfindungsgemäße Geräteanordnung enthält ein Arbeitsgerät, das ein Maschinenwerkzeug für einen Arbeitsgang aus der Gruppe Grünpflege, Mulchen, Mähen, Bodenbearbeitung, Raufutterernte, Körnerfruchternte, Spritzen aufweist und das einen in einer Arbeitsrichtung durch einen Arbeitsbereich bewegbaren Wirkabschnitt hat.

Eine erfindungsgemäße Geräteanordnung umfasst ein Blasgerät für das Wegblasen von Kleinlebewesen aus einem dem Wirkabschnitt des Maschinenwerkzeugs in der Arbeitsrichtung vorgelagerten Abschnitt des Arbeitsbereichs.

Bei einer ersten erfindungsgemäßen Ausführungsform der Geräteanordnung überstreicht die Blasluft für das Wegblasen von Kleinlebewesen den dem Wirkabschnitt des Maschinenwerkzeugs in der Arbeitsrichtung vorgelagerten Abschnitt des Arbeitsbereichs des Arbeitsgeräts mindestens auf einer der Arbeitsbreite $b_w$ des Maschinenwerkzeugs entsprechenden Breite $b_b$ in einer quer zu der Arbeitsrichtung verlaufenden Richtung.

Von Vorteil ist es, wenn das Blasgerät dabei ein Blasluftregister hat, das mehrere Austrittsöffnungen für das Ausströmen der Blasluft in den dem Wirkabschnitt des Maschinenwerkzeugs in der Arbeitsrichtung vorgelagerten Abschnitt des Arbeitsbereichs des Arbeitsgeräts aufweist. Auf diese Weise lässt sich erreichen, dass die Blasluft in dem Arbeitsbereich vor dem Wirkabschnitt des Maschinenwerkzeugs dosiert ist und Kleinlebewesen aus dem Arbeitsbereich weggeblasen werden ohne Schaden zu nehmen.

Eine zweite erfindungsgemäße Ausführungsform der Geräteanordnung enthält ein Arbeitsgerät mit einem Maschinenwerkzeug für einen Arbeitsgang aus der Gruppe Grünpflege, Mulchen, Mähen, Bodenbearbeitung, Raufutterernte, Körnerfruchternte und Spritzen, das einen in einer Arbeitsrichtung durch einen Arbeitsbereich des Arbeitsgeräts bewegbaren Wirkabschnitt hat, und mit einem Blasgerät zum Bereitstellen von Blasluft in einem dem Wirkabschnitt des Maschinenwerkzeugs in der Arbeitsrichtung vorgelagerten Abschnitt des Arbeitsbereichs, wobei das Blasgerät für das Wegblasen von Kleinlebewesen ein Blasluftregister enthält, das mehrere Austrittsöffnungen für das Ausströmen der Blasluft in den dem Wirkabschnitt des Maschinenwerkzeugs in der Arbeitsrichtung vorgelagerten Abschnitt des Arbeitsbereichs des Arbeitsgeräts aufweist. Auf diese Weise kann die Blasluft bei minimalen Strömungsverlusten zu unterschiedlichen Austrittsöffnungen geführt werden.

Von Vorteil ist es, wenn sich das Blasluftregister für das Einstellen der Richtung der aus der wenigstens einen Austrittsöffnung austretenden Blasluft relativ zu dem Arbeitsgerät um eine Schwenkachse verschwenken lässt. Auf diese Weise kann die Richtung der Blasluft in den dem Wirkabschnitt des Maschinenwerkzeugs in der Arbeitsrichtung vorgelagerten Abschnitt des Arbeitsbereichs des Arbeitsgeräts auf Orte mit hoher Aufenthaltswahrscheinlichkeit für Kleinlebewesen in dem Arbeitsbereich des Arbeitsgeräts abgestimmt werden. Die Schwenkachse ist dabei bevorzugt quer zu der Arbeitsrichtung angeordnet.

Das Blasgerät in einer erfindungsgemäßen Geräteanordnung kann eine Vorrichtung für das Erzeugen einer Blasluftströmung aufweisen und wenigstens ein Leitmittel für das Leiten der Blasluftströmung durch wenigstens eine der Austrittsöffnungen mit einer quer oder schräg zu der Arbeitsrichtung verlaufenden Strömungsrichtung enthalten.

Das wenigstens eine Leitmittel für das Leiten der Blasluftströmung durch die wenigstens eine Austrittsöffnung umfasst dabei günstiger Weise eine Düse und/oder ein Leitblech. Zu bemerken ist, dass das wenigstens eine Leitmittel verstellbar sein kann.

Eine dritte erfindungsgemäße Ausführungsform der Geräteanordnung enthält ein Arbeitsgerät mit einem Maschinenwerkzeug für einen Arbeitsgang aus der Gruppe Grünpflege, Mulchen, Mähen, Bodenbearbeitung, Raufutterernte, Körnerfruchternte und Spritzen, das einen in einer Arbeitsrichtung durch einen Arbeitsbereich des Arbeitsgeräts bewegbaren Wirkabschnitt hat, und mit einem Blasgerät zum Bereitstellen von Blasluft in einem dem Wirkabschnitt des Maschinenwerkzeugs in der Arbeitsrichtung vorgelagerten Abschnitt des Arbeitsbereichs, wobei das Blasgerät zum Bereitstellen der Blasluft für das Wegblasen von Kleinlebewesen durch unterschiedliche Austrittsöffnungen Blasluft mit mittleren Strömungsrichtungen bereitstellt, die ausgehend von einer einem Arbeitsfahrzeug zugewandten Seite des Arbeitsgeräts mit der Arbeitsrichtung einen Winkel einschließen, der mit wachsendem Abstand der Austrittsöffnungen von der dem Arbeitsfahrzeug zugewandten Seite zunimmt.

Auf diese Weise lässt sich erreichen, dass bei einer Vorschubbewegung des Arbeitsgeräts in der Arbeitsrichtung Kleinlebewesen auf möglichst kurzen Wegen so aus dem Arbeitsbereich auf die dem Arbeitsfahrzeug abgewandte Seite des Arbeitsgeräts geblasen werden, dass diese nicht in den Wirkabschnitt des Maschinenwerkzeugs in dem Arbeitsgerät gelangen und dort Schaden nehmen können.

Zu bemerken ist, dass alternativ hierzu auch vorgesehen sein kann, dass das Blasgerät zum Bereitstellen der Blasluft für das Wegblasen von Kleinlebewesen durch unterschiedlichen Austrittsöffnungen Blasluft mit mittleren Strömungsrichtungen bereitstellt, die ausgehend von einer einem Arbeitsfahrzeug abgewandten Seite des Arbeitsgeräts mit der Arbeitsrichtung einen Winkel einschließen, der mit wachsendem Abstand der Austrittsöffnungen von der dem Arbeitsfahrzeug abgewandten Seite zunimmt.

Von Vorteil ist es, wenn das Blasgerät wenigstens eine Austrittsöffnung für das Austreten der Blasluft hat, die in der Arbeitsrichtung sowohl vor dem Wirkabschnitt des Maschinenwerkzeugs als auch seitlich versetzt zu diesem angeordnet ist.

Eine vierte erfindungsgemäße Ausführungsform der Geräteanordnung enthält ein Arbeitsgerät mit einem Maschinenwerkzeug für einen Arbeitsgang aus der Gruppe Grünpflege, Mulchen, Mähen, Bodenbearbeitung, Raufutterernte, Körnerfruchternte und Spritzen, das einen in einer Arbeitsrichtung durch einen Arbeitsbereich des Arbeitsgeräts bewegbaren Wirkabschnitt hat, und mit einem Blasgerät zum Bereitstellen von Blasluft in einem dem Wirkabschnitt des Maschinenwerkzeugs in der Arbeitsrichtung vorgelagerten Abschnitt des Arbeitsbereichs, wobei das Blasgerät für das Wegblasen von Kleinlebewesen wenigstens eine Austrittsöffnung für das Austreten der Blasluft hat, die neben dem Abschnitt des Arbeitsbereichs positioniert ist, der dem Wirkabschnitt des Maschinenwerkzeugs in der Arbeitsrichtung vorgelagert ist, und die in der Arbeitsrichtung vor dem Wirkabschnitt des Maschinenwerkzeugs angeordnet ist.

Die Geräteanordnung kann eine Vorrichtung für das Erzeugen einer Blasluftströmung aufweisen und wenigstens ein Leitmittel für das Leiten der Blasluftströmung durch die wenigstens eine Austrittsöffnung mit einer quer oder schräg zu der Arbeitsrichtung verlaufenden Strömungsrichtung enthalten. Das wenigstens eine Leitmittel kann verstellbar sein.

Das Blasgerät kann einen Blasluftkanal für das Führen der Blasluftströmung zu der wenigstens einen Austrittsöffnung aufweisen.

Von Vorteil ist es, wenn der Blasluftkanal in einer Rohrleitung zu einem Düsenkörper geführt ist, in dem die wenigstens eine Austrittsöffnung ausgebildet ist. Der Düsenkörper kann an die Rohrleitung beweglich angeschlossen sein. Die Geräteanordnung kann insbesondere ein Kugelgelenk für das Verlagern des Düsenkörpers relativ zu der Rohrleitung aufweisen.

Von Vorteil ist es, wenn die Rohrleitung für das Verlagern der wenigstens einen Austrittsöffnung in einem Schwenkgelenk schwenkbeweglich gelagert ist. Das Schwenkgelenk kann eine zu der Arbeitsrichtung senkrechte Schwenkachse haben.

Eine erfindungsgemäße Geräteanordnung kann einen Halterahmen aufweisen, an dem ein Umlenkgetriebe festgelegt ist, das eine Schnittstelle zum Anschließen einer Gelenkwelle für das Verbinden mit einem Gelenkwellenantrieb eines Arbeitsfahrzeugs hat, das einen ersten mit einem ersten Getriebe für das Antreiben des Maschinenwerkzeugs in dem Arbeitsgerät drehgekoppelten Abtrieb hat und das einen zweiten, mit einem zweiten Getriebe für das Antreiben der Vorrichtung für das Erzeugen einer Blasluftströmung in dem Blasluftkanal des Blasgeräts gekoppelten Abtrieb aufweist.

Die Geräteanordnung kann einen Elektromotor oder einen Hydraulikmotor für das Antreiben der Vorrichtung für das Erzeugen einer Blasluftströmung in dem Blasluftkanal des Blasgeräts enthalten.

Das Arbeitsgerät kann insbesondere ein Arbeitsgerät aus der Gruppe Mähdrescher, Maishäcksler, Mulchgerät, Mähgerät oder Bodenfräse sein. Insbesondere kann das Blasgerät an einem Halterahmen für das Halten des Maschinenwerkzeugs in dem Arbeitsgerät festgelegt sein.

Ein erfindungsgemäßes Arbeitsfahrzeug enthält eine vorstehend angegebene Geräteanordnung für das Bewegen des Wirkabschnitts des Maschinenwerkzeugs des Arbeitsgeräts durch den Arbeitsbereich in der Arbeitsrichtung. Die Erfindung umfasst auch ein Arbeitsfahrzeug mit einer Geräteanordnung für das Bewegen des Wirkabschnitts des Maschinenwerkzeugs des Arbeitsgeräts durch den Arbeitsbereich in der Arbeitsrichtung mit einem Arbeitsfahrzeugrahmen, an dem das Blasgerät bezogen auf die Arbeitsrichtung frontseitig und das Arbeitsgerät heckseitig aufgenommen ist.

In einem erfindungsgemäßen Verfahren zum Ausführen eines Arbeitsgangs aus der Gruppe Grünpflege, Mähen, Mulchen, Bodenbearbeitung, Raufutterernte, Körnerfruchternte und Spritzen wird ein Maschinenwerkzeug, das einen Wirkabschnitt hat, in einer Arbeitsrichtung durch einen Arbeitsbereich bewegt, wobei für das Wegblasen von Kleinlebewesen aus einem dem Wirkabschnitt des Maschinenwerkzeugs in der Arbeitsrichtung vorgelagerten Abschnitt des Arbeitsbereichs ein gasförmiger Fluidstrom bereitgestellt wird, der den dem Wirkabschnitt des Maschinenwerkzeugs in der Arbeitsrichtung vorgelagerten Abschnitt des Arbeitsbereichs mindestens auf einer der Arbeitsbreite $b_w$ des Maschinenwerkzeugs entsprechenden Breite $b_b$ in einer quer zu der Arbeitsrichtung verlaufenden Richtung überstreicht.

In einem erfindungsgemäßen Verfahren zum Ausführen eines Arbeitsgangs aus der Gruppe Grünpflege, Mähen, Mulchen, Bodenbearbeitung, Raufutterernte, Körnerfruchternte und Spritzen wird ein Maschinenwerkzeug, das einen Wirkabschnitt hat, in einer Arbeitsrichtung durch einen Arbeitsbereich bewegt, wobei für das Wegblasen von Kleinlebewesen aus einem dem Wirkabschnitt des Maschinenwerkzeugs in der Arbeitsrichtung vorgelagerten Abschnitt des Arbeitsbereichs ein gasförmiger Fluidstrom bereitgestellt wird, der in dem dem Wirkabschnitt des Maschinenwerkzeugs in der Arbeitsrichtung vorgelagerten Abschnitt des Arbeitsbereichs eine mittlere Strömungsgeschwindigkeit v hat, für die gilt: 100 m/s $\leq$ v $\leq$ 300 m/s bevorzugt 150 m/s $\leq$ v $\leq$ 260 m/s.

Auf diese Weise wird ein effizientes und gleichzeitig schonendes Austragen von Kleinlebewesen wie etwa Bienen aus dem Abschnitt eines Arbeitsbereichs ermöglicht, der dem Maschinenwerkzeug vorgelagert ist.

Im Folgenden wird die Erfindung anhand der in der Zeichnung in schematischer Weise dargestellten Ausführungsbeispiele näher erläutert.

Es zeigen:

Fig. 1 eine perspektivische Ansicht eines Arbeitsfahrzeugs mit einer ersten Geräteanordnung, die ein als ein Mulchgerät ausgebildetes Arbeitsgerät aufweist;

Fig. 2 eine Seitenansicht des Arbeitsfahrzeugs mit der Geräteanordnung;

Fig. 3 eine Draufsicht des Arbeitsfahrzeugs mit der Geräteanordnung;

Fig. 4 eine Teilansicht eines Blasluftregisters in der Geräteanordnung;

Fig. 5 eine Teilansicht des Arbeitsgeräts und des Blasluftregisters in der Geräteanordnung;

Fig. 6 ein Arbeitsfahrzeug mit einer zweiten Geräteanordnung;

Fig. 7 eine perspektivische Ansicht des Arbeitsfahrzeugs mit einer weiteren Geräteanordnung, die ein als ein Mulchgerät ausgebildetes Arbeitsgerät aufweist;

Fig. 8 eine perspektivische Ansicht des Arbeitsfahrzeugs mit einer weiteren Geräteanordnung, die ein als ein Mulchgerät ausgebildetes Arbeitsgerät aufweist;

Fig. 9 bis Fig. 13 das Arbeitsgerät mit unterschiedlichen Einstelllungen eines Düsenkörpers;

Fig. 14 eine weitere Geräteanordnung für den Anschluss an ein Arbeitsfahrzeug, die ein als ein Mulchgerät ausgebildetes Arbeitsgerät aufweist;

Fig. 15a eine Teilansicht der an ein Arbeitsfahrzeug angeschlossenen weiteren Geräteanordnung;

Fig. 15b eine Teilansicht der weiteren Geräteanordnung;

Fig. 16 eine perspektivische Ansicht des Arbeitsfahrzeugs mit einer weiteren Geräteanordnung, die ein als ein Mähgerät ausgebildetes Arbeitsgerät aufweist;

Fig. 17 eine perspektivische Ansicht des Arbeitsfahrzeugs mit einer weiteren Geräteanordnung, die ein als ein Mähgerät ausgebildetes Arbeitsgerät aufweist;

Fig. 18 eine Ansicht des Arbeitsfahrzeugs mit einer weiteren Geräteanordnung, die ein als eine Bodenfräse ausgebildetes Arbeitsgerät aufweist;

Fig. 19 eine perspektivische Ansicht des Arbeitsfahrzeugs mit einer weiteren Geräteanordnung, die ein als ein Mulchgerät ausgebildetes Arbeitsgerät aufweist;

Fig. 20 eine perspektivische Ansicht einer Geräteanordnung mit einem als Mähdrescher ausgebildeten Arbeitsgerät;

Fig. 21 eine Seitenansicht einer Geräteanordnung mit einem als Maishäcksler ausgebildeten Arbeitsgerät;

Fig. 22 eine perspektivische Ansicht der Geräteanordnung mit dem als Maishäcksler ausgebildeten Arbeitsgerät;

Fig. 23 eine erste Geräteanordnung für das Rasenmähen;

Fig. 24 und Fig. 25 eine zweite Geräteanordnung für das Rasenmähen;

Fig. 26 und Fig. 27 eine dritte Geräteanordnung für das Rasenmähen; und

Fig. 28 und Fig. 29 eine vierte Geräteanordnung für das Rasenmähen.

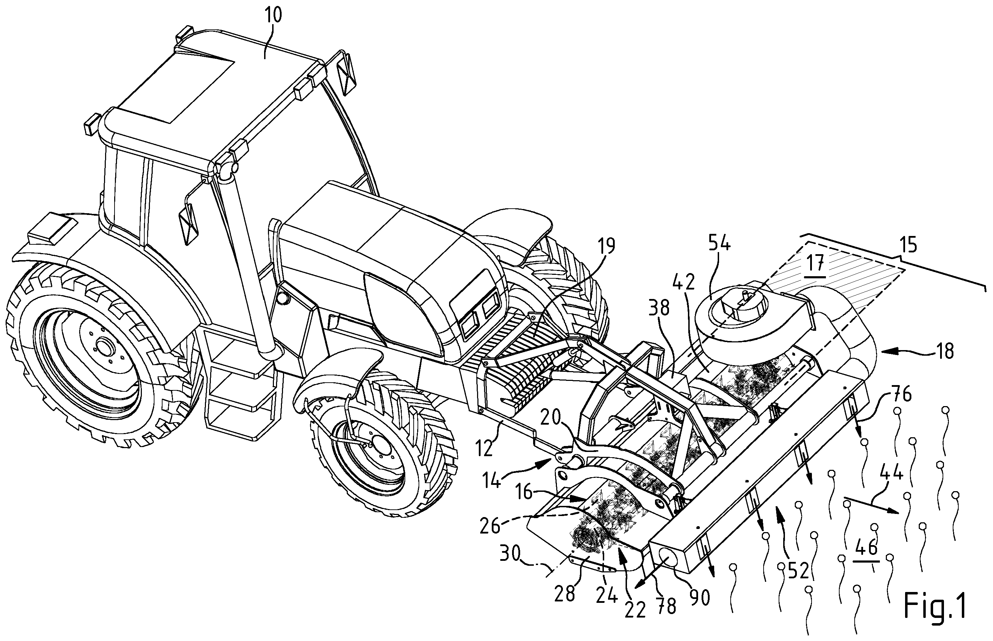

Das in Fig. 1 gezeigte Arbeitsfahrzeug 10 ist ein Traktor, der an einem Fronthubwerk 12 mit einer als Norm-Dreipunkt-Kat1 ausgebildeten Schnittstelle 14 eine Geräteanordnung 15 mit einem als ein Mulchgerät ausgebildeten Arbeitsgerät 16 trägt, das mit einem Blasgerät 18 kombiniert ist. Das Arbeitsgerät 16 hat einen Halterahmen 20 und enthält ein Maschinenwerkzeug 22 mit einer Rotorwelle 24, an die als Schlegel ausgebildete Werkzeuge 26 angeschlossen sind. Die Rotorwelle 24 ist an einem mit dem Halterahmen 20 starr verbundenen Rotorwellenträger 28 um ihre Rotorwellenachse 30 drehbar gelagert. Die als Schlegel ausgebildeten Werkzeuge 26 sind an der Rotorwelle 24 umfangsseitig aufgenommen und dort jeweils um eine zu der Rotorwellenachse 30 parallele Schwenkachse 34 schwenkbeweglich gelagert.

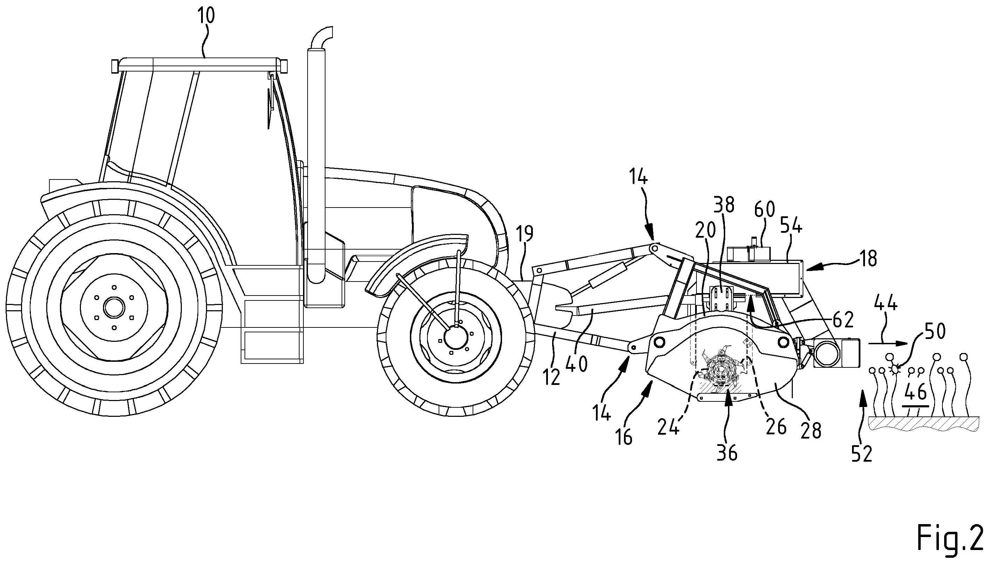

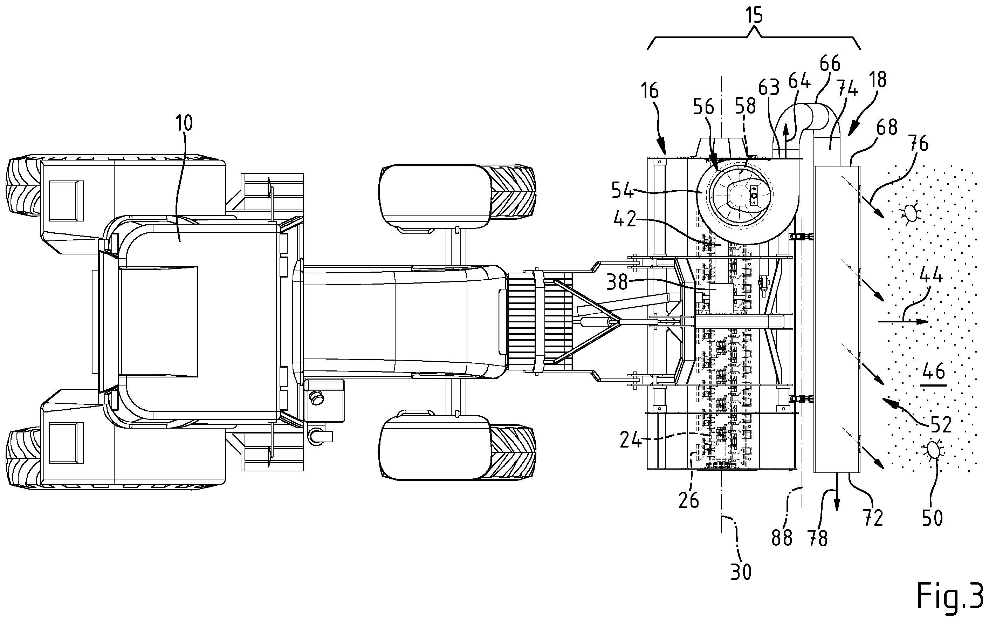

Die Fig. 2 ist eine Seitenansicht des Arbeitsfahrzeugs 10 mit der Geräteanordnung 15. Die Fig. 3 zeigt das Arbeitsfahrzeug 10 mit der Geräteanordnung 15 als Draufsicht.

Für das Antreiben der Rotorwelle 24 gibt es in dem Arbeitsgerät 16 ein an dem Halterahmen 20 festgelegtes Umlenkgetriebe 38, das eine Schnittstelle zum Anschließen einer Zapfwelle 40 für das Verbinden mit einem Gelenkwellenantrieb des Arbeitsfahrzeugs 10 hat und das einen Abtrieb zu einer Antriebswelle 42 aufweist, die an ein Keilriemengetriebe für das Antreiben der Rotorwelle 24 angeschlossen ist. Die Rotorwelle 24 rotiert beim Mulchen mit dem Mulchgerät mit einer hohen Umdrehungszahl, die z. B. 2.000 U/min bis 3.000 U/min oder noch mehr betragen kann. Bei Rotieren der Rotorwelle 24 schlagen die daran aufgenommenen Werkzeuge 26 Grüngut ab und zerkleinern Schnittholz und/oder Stroh, insbesondere Maisstroh, das sich in einem Wirkabschnitt 36 des Maschinenwerkzeugs 22 befindet.

Mittels des Arbeitsfahrzeugs 10 kann der Wirkabschnitt 36 des Maschinenwerkzeugs 22 in dem Arbeitsgerät 16 in einer mit einem Pfeil kenntlich gemachten Arbeitsrichtung 44 bewegt werden, um damit in einem Arbeitsbereich 46 zu mulchen. Das Fronthubwerk 12 ermöglicht das Anheben und Absenken der Geräteanordnung 15 an dem Arbeitsfahrzeug 10, wobei für das Arbeitsgerät 16 die Lage einer Arbeitsebene 17 des Arbeitsgeräts 16 relativ zu dem Arbeitsfahrzeugrahmen 19 eingestellt werden kann. Das Blasgerät 18 ist an den Halterahmen 20 des Arbeitsgeräts 16 angeschlossen. Das Blasgerät 18 dient für das Wegblasen von Kleinlebewesen 50 aus einem dem Wirkabschnitt 36 des Maschinenwerkzeugs 22 in der Arbeitsrichtung vorgelagerten Abschnitt 52 des Arbeitsbereichs 46.

Das Blasgerät 18 hat als Vorrichtung 54 für das Erzeugen einer Blasluftströmung ein Gebläse mit einem Gehäuse, in dem ein Gebläse-Turbinenrad 56 mit Turbinenschaufeln 58 angeordnet ist. Das Gebläse-Turbinenrad 56 ist mittels eines Übersetzungsgetriebes 60 mit der an das Keilriemengetriebe für das Antreiben der Rotorwelle 24 des Arbeitsgeräts 16 angeschlossenen Antriebswelle 42 bewegungsgekoppelt. Indem das Gebläse-Turbinenrad 56 in dem Gehäuse des Gebläses rotiert, wird durch eine Ansaugöffnung 62 des Gehäuses Umgebungsluft angesaugt und an einer Gebläse-Ausgangsöffnung 63 Blasluft mit einer in der Richtung des Pfeils 64 verlaufenden Blasluftströmung bereitgestellt. Das Blasgerät 18 enthält eine an die Gebläse-Ausgangsöffnung 63 angeschlossene flexible Rohrleitung 66. Diese flexible Rohrleitung 66 kommuniziert mit einem Blasluftregister 68, das mehrere frontseitige Austrittsöffnungen 70 für Blasluft und eine seitliche Austrittsöffnung 72 für Blasluft hat. Die mittels des Gebläses in dem Blasgerät 48 erzeugte Blasluft, die in dem Gebläse von der Gebläse-Ausgangsöffnung 63 durch einen Blasluftkanal 74 zu den Austrittsöffnungen 70, 72 geführt ist, der durch die Rohrleitung 66 verläuft und der sich in das Blasluftregister 68 erstreckt, kann durch die Austrittsöffnungen 70, 72 in dem Blasluftregister 68 in den mittels der Pfeile 76, 78 kenntlich gemachten Richtungen quer zu der Arbeitsrichtung 44 austreten.

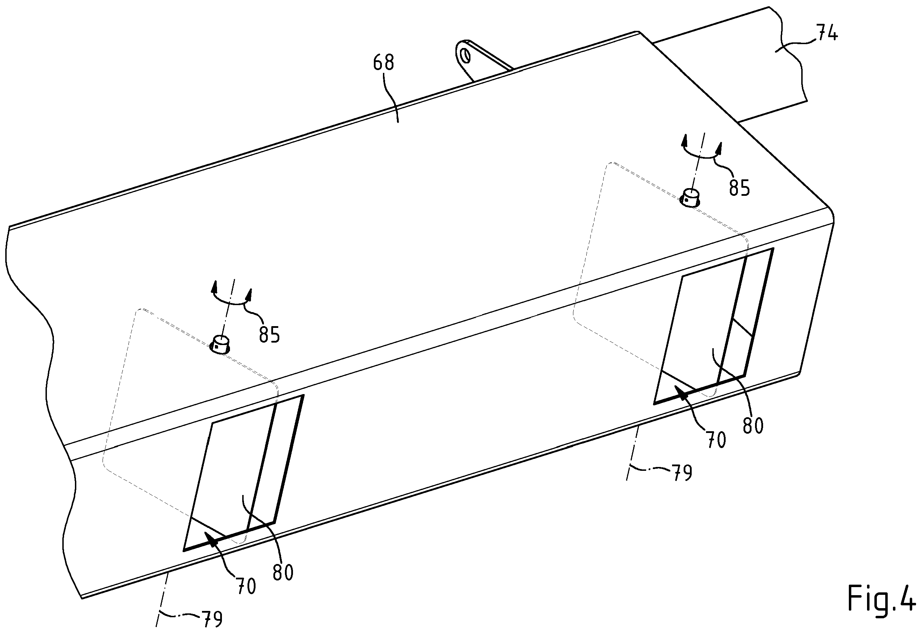

Die Fig. 4 ist eine perspektivische Teilansicht des Blasluftregisters 68 des Blasgeräts 18 in der Geräteanordnung 15. In dem Blasluftregister 68 sind mehrere jeweils um eine zu der zu der Rotorwellenachse 30 der Rotorwelle 24 des Arbeitsgeräts 16 senkrechte Schwenkachse 79 verschwenkbare Leitbleche 80 angeordnet. Diese Leitbleche 80 wirken als Leitmittel für das Leiten der Blasluftströmung in dem Blasluftkanal 74 des Blasgeräts 18. Durch Verstellen der Leitbleche 80 in dem Blasluftregister 68 um die Schwenkachse 79 entsprechend dem Doppelpfeil 85 kann die Richtung der mittels des Gebläses erzeugten Blasluft eingestellt werden, die durch die frontseitigen Austrittsöffnungen 70 des Blasluftregisters 68 austritt. Auf diese Weise ist es möglich, die Richtung, mit der die Blasluft in der Arbeitsrichtung gesehen vor dem Wirkabschnitt 36 des Maschinenwerkzeugs 22 liegenden Abschnitt 52 des Arbeitsbereichs 46 gelangt, z. B. an Hangneigungen und unterschiedliche Grashöhen anzupassen.

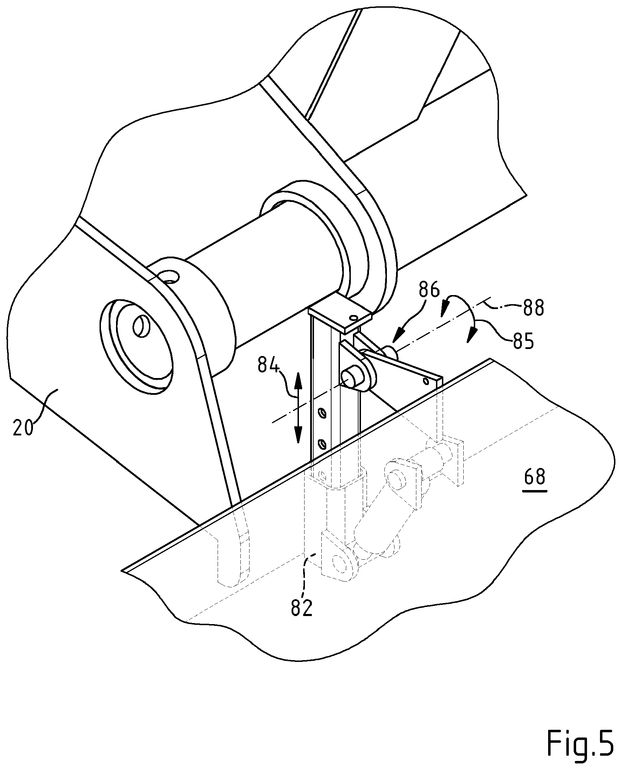

Die Fig. 5 ist eine Teilansicht des Arbeitsgeräts 16 und des Blasluftregisters 68 der Geräteanordnung 15. Das Blasluftregister 68 ist an dem Halterahmen 20 des Arbeitsgeräts 16 festgelegt. An dem Halterahmen 20 kann das Blasluftregister 68 in einer Linearführung 82 in einer zu der Arbeitsebene 17 des Arbeitsgeräts 16 senkrechten Richtung entsprechend dem Doppelpfeil 84 verlagert werden, die das Blasluftregister 68 mit einem ersten und einem zweiten Schwenkgelenk 86 trägt, die jeweils eine zu der Rotorwellenachse 30 parallele Schwenkachse 88 aufweisen

Durch Verlagern des Blasluftregisters 68 an dem Halterahmen 20 des Arbeitsgeräts 16 ist es möglich, die Richtung der durch die Austrittsöffnungen 70 austretenden Blasluft des Blasgeräts 18 in Bezug auf die Arbeitsebene 17 des Arbeitsgeräts 16 und die Arbeitsrichtung 44 zu variieren, in der sich das Arbeitsfahrzeug 10 mit der Geräteanordnung 15 bewegt. Bei der an dem Arbeitsfahrzeug 10 aufgenommenen Geräteanordnung 15 kann damit in einem dem Wirkabschnitt 36 des Maschinenwerkzeugs 22 in einen Abschnitt 52 des Arbeitsbereichs 46 gerichtete Blasluft bereitgestellt werden, der dem Wirkabschnitt 36 des Maschinenwerkzeugs 22 in der mittels des Pfeils kenntlich gemachten Arbeitsrichtung 44 vorgelagert ist. Indem die erzeugte Blasluft durch den Abschnitt 52 strömt, werden aus diesem Kleinlebewesen 50, insbesondere Insekten weggeblasen, so dass diese nicht in den Wirkabschnitt 36 des Maschinenwerkzeugs 22 gelangen können.

Es hat sich gezeigt, dass wenn mittels des Blasgeräts 18 in der Geräteanordnung 15 ein Luftstrom von rund 10 cbm bis rund 500 cbm, bevorzugt rund 50 cbm bis rund 200 cbm, besonders bevorzugt rund 80 cbm bis rund 150 cbm Luft pro Minute bei einer Strömungsgeschwindigkeit von rund 100 m/s bis rund 300 m/s, bevorzugt rund 150 m/s bis rund 260 m/s bereitstellt wird, rund 90% bis 95% der Insekten und Kleinlebewesen 50 in dem Arbeitsbereich 46 durch Wegblasen vor dem Maschinenwerkzeug 22 in dem Arbeitsgerät 16 geschützt werden können.

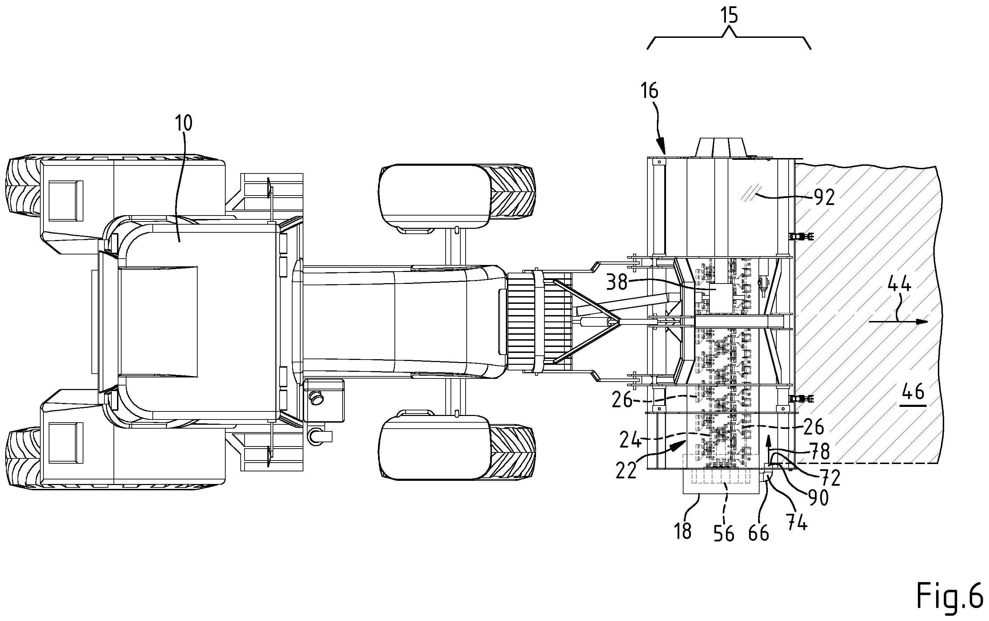

Die Fig. 6 zeigt ein Arbeitsfahrzeug 10 mit einer weiteren Geräteanordnung 15. Soweit die Baugruppen und Elemente dieser Geräteanordnung den Baugruppen und Elementen der anhand der Fig. 1 bis 5 beschriebenen Geräteanordnung 15 entsprechen, sind diese durch die gleichen Zahlen als Bezugszeichen kennglich gemacht. Die in der Fig. 6 gezeigte Geräteanordnung 15 enthält als ein Arbeitsgerät 16 ebenfalls ein Mulchgerät mit einer Rotorwelle 24, an die als Schlegel ausgebildete Werkzeuge 26 angeschlossen sind. In der Geräteanordnung 15 gibt es ein Blasgerät 18, das ein Gebläse-Turbinenrad 56 enthält, das mit der Rotorwelle 24 starr verbunden ist. Das Blasgerät 18 hat einen Blasluftkanal 74, der durch eine Rohrleitung 66 zu einer Düse 90 geführt ist, durch welche die Blasluft als ein zu der Rotorwellenachse 30 im wesentlichen paralleler Blasluftstrom austritt, der auf der Seite der Rotorwelle 24, die dem Arbeitsfahrzeug 10 abgewandt ist, von der Austrittsöffnung 72 der Düse 90 zu der Seite des Arbeitsgeräts 16 verläuft, die dem Gebläse-Turbinenrad 56 in der Geräteanordnung 15 gegenüberliegt. Der Blasluftstrom ist hier in der Richtung des Pfeils 78 unterhalb einer Schutzabdeckung 92 des Arbeitsgeräts 16 quer zu der mittels des Pfeils kenntlich gemachten Arbeitsrichtung 44 durch einen dem Wirkabschnitt des Maschinenwerkzeug 22 mit der Rotorwelle 24 und den als Schlegel ausgebildeten Werkzeugen 26 in der Arbeitsrichtung 44 vorgelagerten Abschnitt des Arbeitsbereichs 46 geführt, um hier Kleinlebewesen, die sich in dem Arbeitsbereich 46 befinden, zur Seite wegzublasen, damit diese nicht in den Wirkschnitt des Maschinenwerkzeugs 22 gelangen. Die Austrittsöffnung 72 der Düse 90 ist hierfür in der Arbeitsrichtung 44 gesehen vor dem Wirkabschnitt des Maschinenwerkzeugs 22 und seitlich versetzt zu diesem angeordnet. Die Austrittsöffnung 72 der Düse 90 befindet sich damit neben dem Abschnitt des Arbeitsbereichs 46, der in der Arbeitsrichtung 44 gesehen vor dem Wirkabschnitt 36 des Maschinenwerkzeugs 22 angeordnet ist und der an den Wirkabschnitt des Maschinenwerkzeugs 22 anschließt.

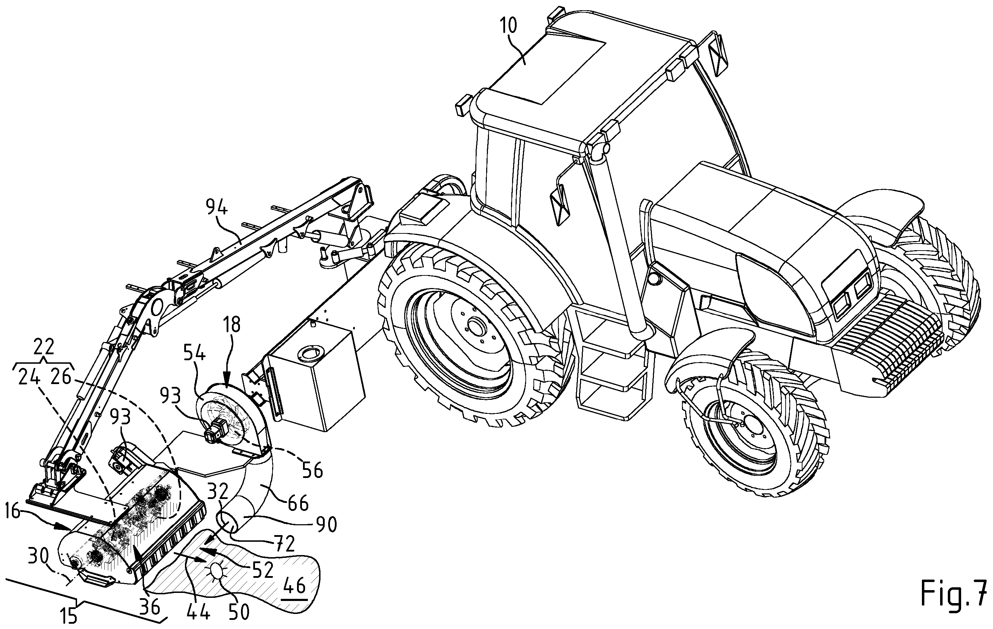

Die Fig. 7 zeigt ein Arbeitsfahrzeug 10 mit einer weiteren Geräteanordnung 15. Die in der Fig. 7 gezeigte Geräteanordnung 15 enthält als ein Arbeitsgerät 16 ein Mulchgerät, das an einem an das Heck eines Arbeitsfahrzeugs 10 angeschlossenen Auslegerarm 94 aufgenommen ist. Das Arbeitsgerät 16 hat eine mittels eines Hydraulikmotors 93 angetriebene Rotorwelle 24 mit als Schlegel ausgebildeten Werkzeugen 26. In der Geräteanordnung 15 gibt es ein Blasgerät 18 mit einem Gebläse-Turbinenrad 56, das ebenfalls mittels eines Hydraulikmotors 93 angetrieben ist.

Das Blasgerät 18 hat einen Blasluftkanal, der durch eine Rohrleitung 66 zu einer Austrittsöffnung 72 geführt ist, durch welche die Blasluft als ein zu der Rotorwellenachse 30 im wesentlichen paralleler Blasluftstrom austritt, der auf der Seite der Rotorwelle 24, die dem Arbeitsfahrzeug 10 abgewandt ist, von der Austrittsöffnung 72 der Düse 90 zu der Seite des Arbeitsgeräts 16 verläuft, die dem Gebläse-Turbinenrad 56 in der Geräteanordnung 15 gegenüberliegt. Der Blasluftstrom verläuft hier in einer zu der Rotorwellenachse 30 parallelen Richtung 32 entsprechend dem Pfeil quer zu der mittels des Pfeils kenntlich gemachten Arbeitsrichtung 44 durch einen dem Wirkabschnitt des Maschinenwerkzeugs 22 vorgelagerten Abschnitt des 52 des Arbeitsbereichs 46, um hier wiederum Kleinlebewesen 50, die sich in dem Arbeitsbereich 46 befinden, zur Seite wegzublasen. Die Austrittsöffnung 72 der Düse 90 ist hierfür dem Wirkabschnitt 36 des Maschinenwerkzeugs 22 in der Arbeitsrichtung 44 vorgelagert. Sie befindet sich dabei ebenfalls neben dem Abschnitt des Arbeitsbereichs 46, der vor dem Wirkabschnitt 36 des Maschinenwerkzeugs 22 in der Arbeitsrichtung 44 angeordnet ist und an den Wirkabschnitt 36 des Maschinenwerkzeugs angrenzt.

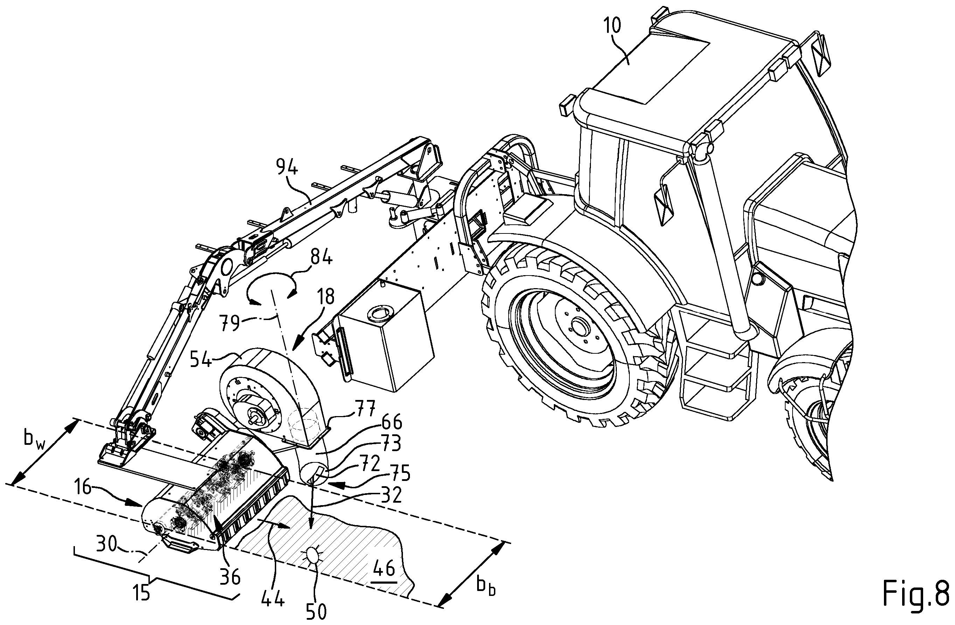

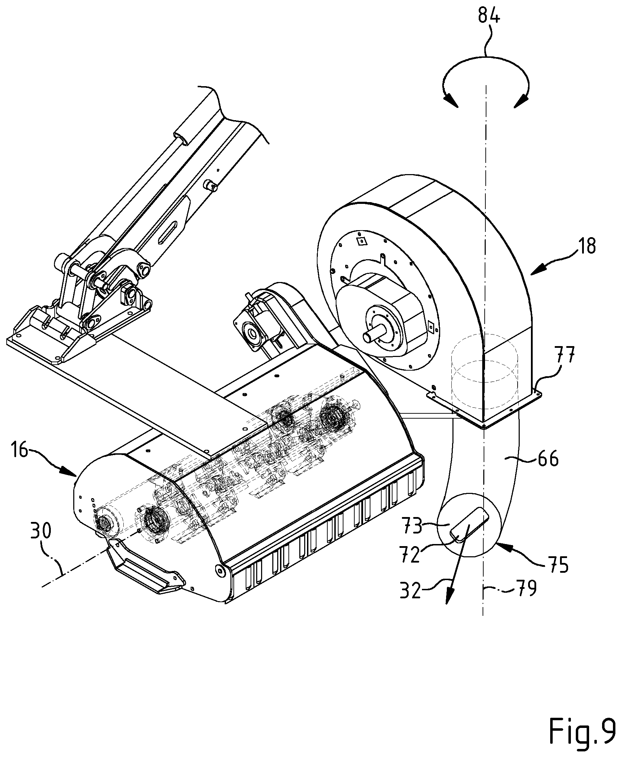

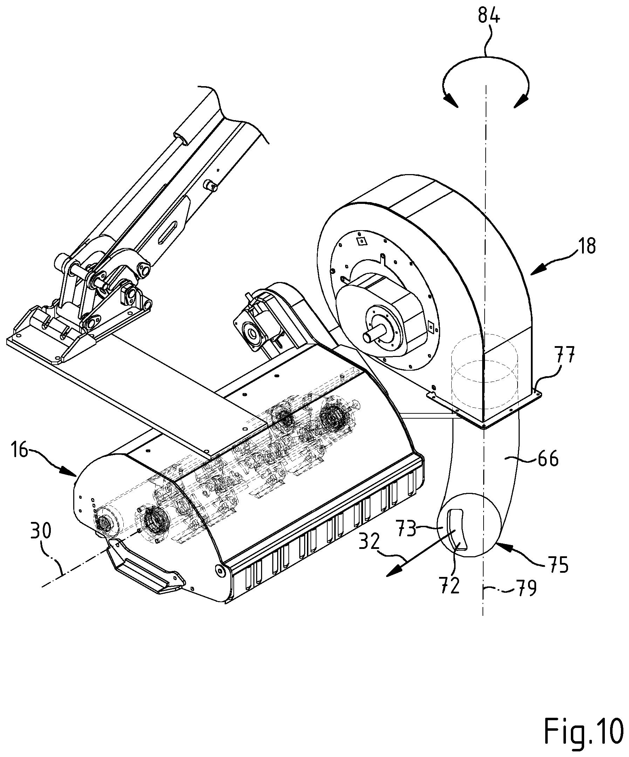

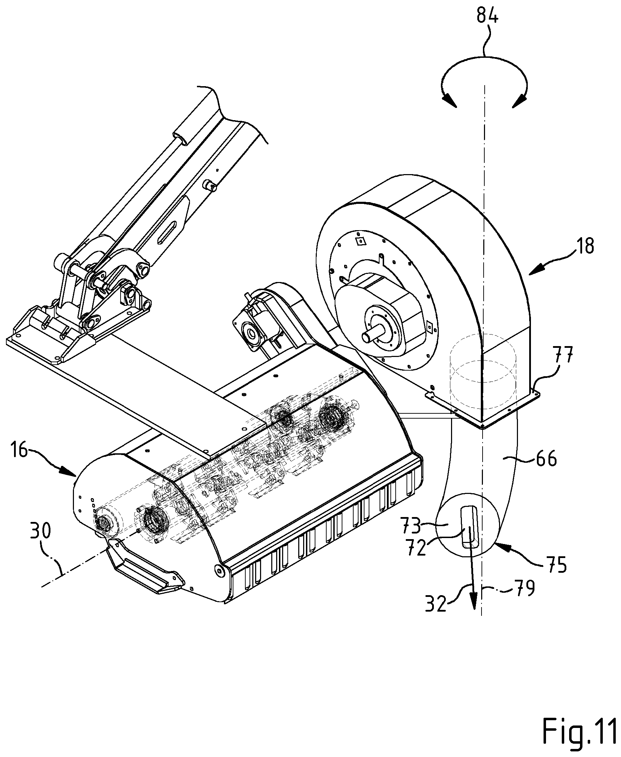

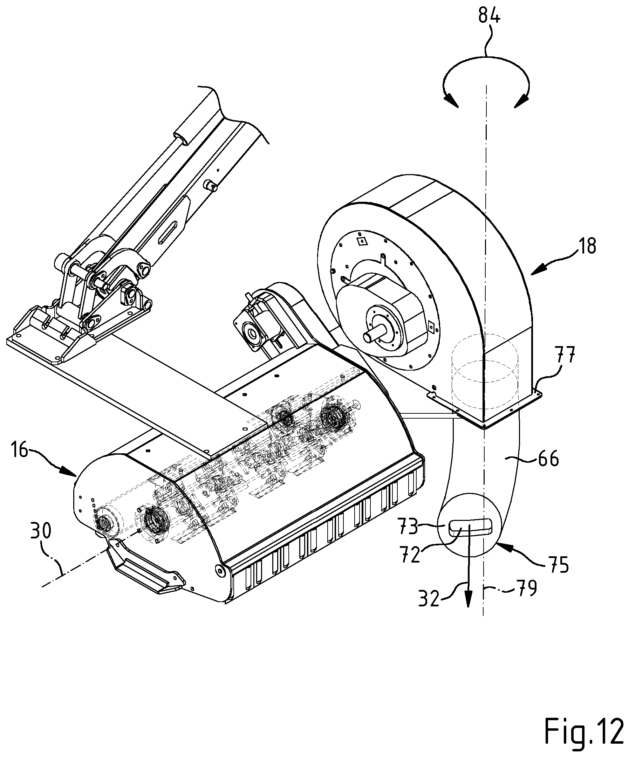

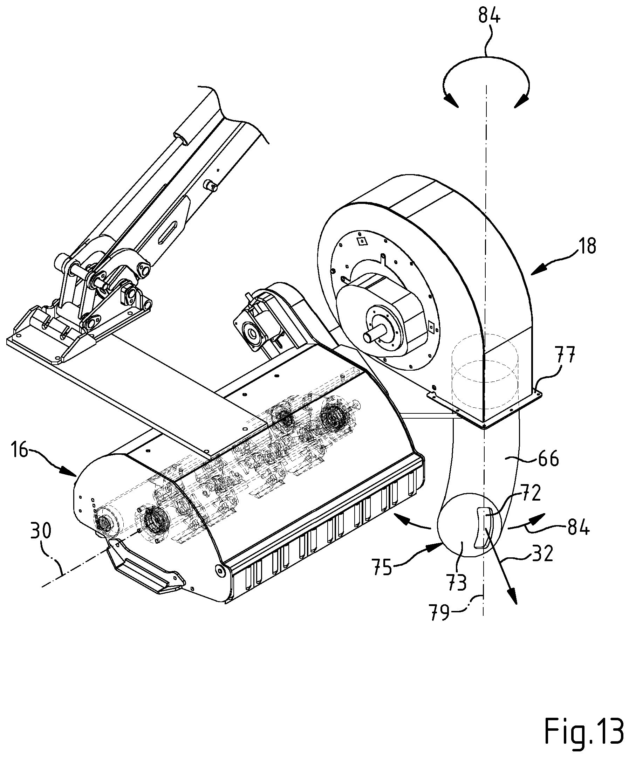

Die Fig. 8 zeigt ein Arbeitsfahrzeug 10 mit einer weiteren Geräteanordnung 15 mit einem als ein Mulchgerät ausgebildeten Arbeitsgerät 16. Soweit die Baugruppen und Elemente dieser Geräteanordnung den Baugruppen und Elementen der anhand der Fig. 7 beschriebenen Geräteanordnung 15 entsprechen, sind diese durch die gleichen Zahlen als Bezugszeichen kenntlich gemacht. Die Geräteanordnung 15 mit dem Blasgerät 18 ist hier an einem an das Heck des Arbeitsfahrzeugs 10 angeschlossenen Auslegerarm 94 aufgenommen. Der Blasluftkanal 74 des Blasgeräts 18 verläuft hier durch eine Rohrleitung 66 zu einer Düse mit einem Düsenkörper 73, der an die Rohrleitung 66 angeschlossen ist. Der Düsenkörper 73 ist in der Rohrleitung 66 in einem Kugelgelenk 75 gelagert. Das Blasgerät 18 wiederum weist ein Schwenkgelenk 77 auf, das die Rohrleitung 66 hält. Das Schwenkgelenk 77 hat eine Schwenkachse 79, die zu der Arbeitsrichtung 44 des Arbeitsgeräts 16 senkrecht steht. Die Rohrleitung 66 ist bogenförmig gekrümmt und kann entsprechend dem Doppelpfeil 84 um die Schwenkachse 79 des Schwenkgelenks 77 bewegt werden. Die Fig. 9 bis Fig. 13 zeigen das Arbeitsgerät 16 mit unterschiedlichen Einstellungen des Düsenkörpers 73 an der Rohrleitung 66. Durch Verschwenken der Rohrleitung 66 ist es möglich, die Austrittsöffnung 72 für das Austreten der mittels des Blasgeräts 18 erzeugten Blasluft in der Arbeitsrichtung 44 vor dem Wirkabschnitt 36 des Maschinenwerkzeugs 22 seitlich versetzt zu diesem anzuordnen. Der Düsenkörper 73 kann dabei in dem Kugelgelenk 75 an der Rohrleitung 66 derart eingestellt werden, dass die Blasluft für das Wegblasen von Kleinlebewesen 50 den dem Wirkabschnitt 36 des Maschinenwerkzeugs 22 in der Arbeitsrichtung 44 vorgelagerten Abschnitt des Arbeitsbereichs 46 des Arbeitsgeräts 16 auf einer der Arbeitsbreite $b_w$ des Maschinenwerkzeugs 22 entsprechenden Breite $b_b$ in einer quer zu der Arbeitsrichtung 44 verlaufenden Richtung überstreicht.

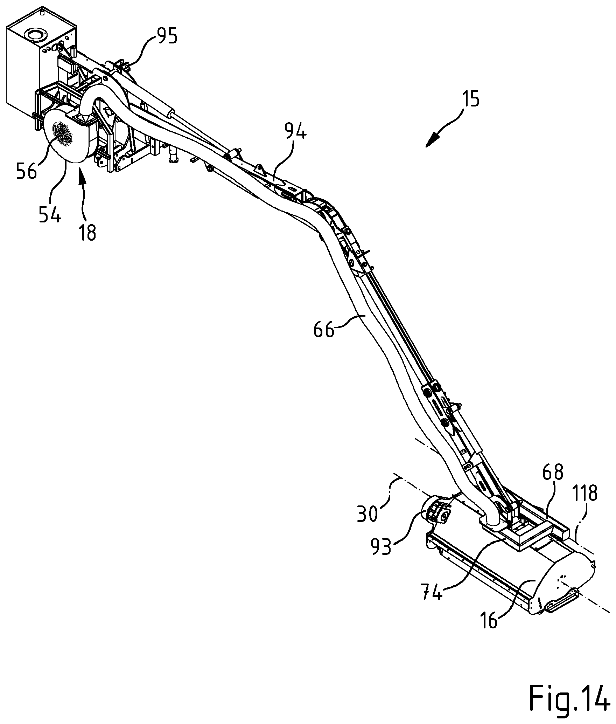

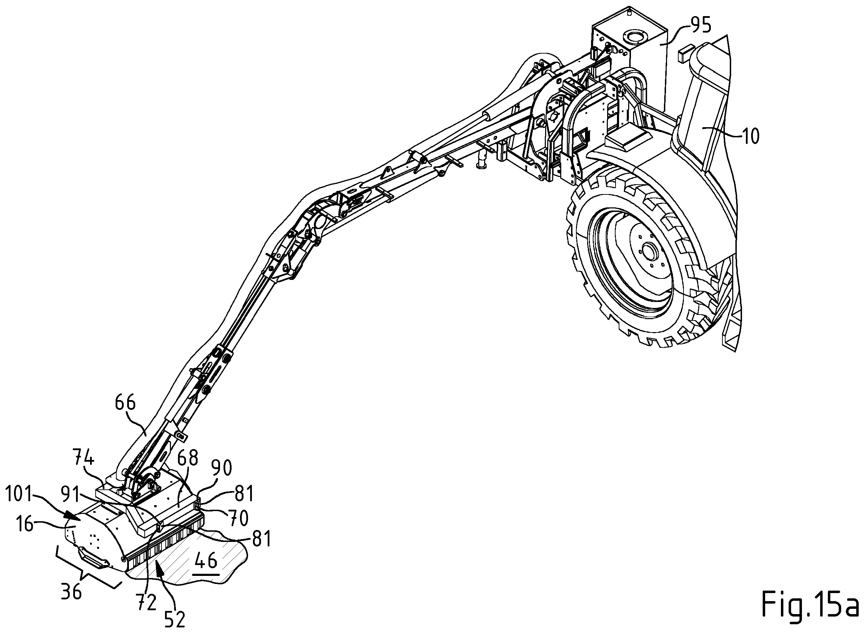

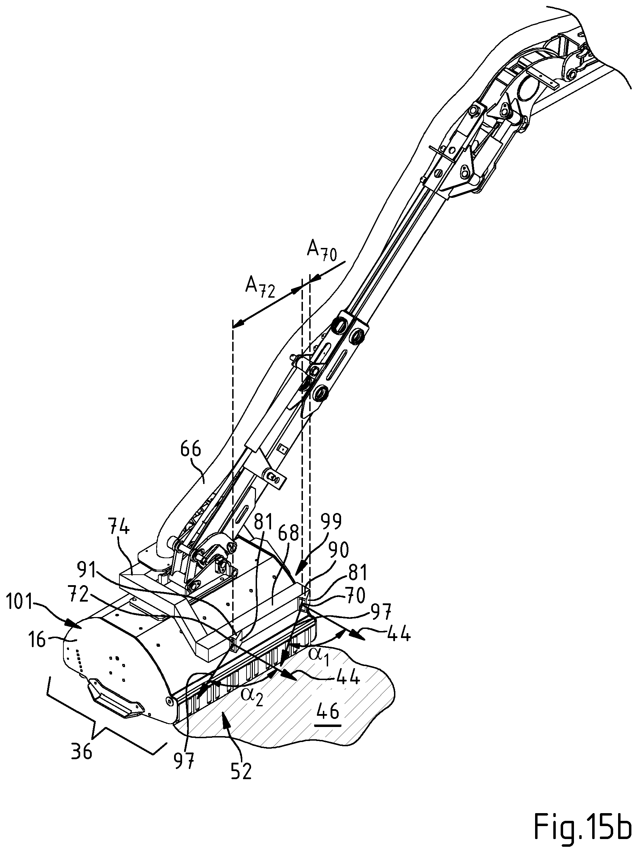

Die Fig. 14 zeigt eine weitere Geräteanordnung 15 für den Anschluss an ein Arbeitsfahrzeug. Die Geräteanordnung 15 enthält ein als ein Mulchgerät ausgebildetes Arbeitsgerät 16. In der Fig. 15a ist eine Teilansicht der Geräteanordnung 15 mit einem Arbeitsfahrzeug 10 zu sehen. Die Fig. 15b ist eine weitere Teilansicht der Geräteanordnung 15. Das Arbeitsgerät 16 ist an einen Auslegerarm 94 angeschlossen, der schwenkbeweglich an einer Auslegerarm-Basis 95 befestigt ist, die an ein am Heck des Arbeitsfahrzeugs 10 angeordnetes Hubwerk z.B. mit einer Norm-Dreipunkt-Kat1 ausgebildeten Schnittstelle angeschlossen werden kann.

Das Arbeitsgerät 16 hat als Maschinenwerkzeug eine mittels eines Hydraulikmotors 93 angetriebene Rotorwelle mit als Schlegel ausgebildeten Werkzeugen, die mit hoher Umdrehungszahl, die z. B. 2.000 U/min bis 3.000 U/min oder noch mehr betragen kann, um eine Rotorwellenachse 30 rotiert.

Die Geräteanordnung 15 enthält ein Blasgerät 18 mit einem Gebläse-Turbinenrad 56, das in einem Drehlager an der Auslegerarm-Basis 95 gelagert ist und für das Erzeugen von Blasluft mittels eines Hydraulikmotors angetrieben werden kann. Das Blasgerät 18 in der Geräteanordnung 15 hat eine flexible Rohrleitung 66, die mit einem an dem Maschinenrahmen des Arbeitsgeräts 16 festgelegten Blasluftkanal 74 verbunden ist, der in ein Blasluftregister 68 mündet. Durch die flexible Rohrleitung 66 und den Blasluftkanal 74 kann die durch Drehen des Gebläse-Turbinenrads erzeugte Blasluft in das Blasluftregister 68 geleitet werden.

Das Blasluftregister 68 ist in eine zu der Rotorwellenachse 30 parallele Richtung 118 erstreckt. An das Blasluftregister 68 ist eine erste Düse 90 mit einer Austrittsöffnung 70 für Blasluft und eine zweite Düse 91 mit einer Austrittsöffnung 72 für Blasluft angeschlossen.

Die erste Düse 90 befindet sich an einem dem Arbeitsfahrzeug 10 zugewandten Endabschnitt des Blasluftregisters 68. Sie ist neben dem Abschnitt 52 des Arbeitsbereichs 46 des Maschinenwerkzeugs positioniert, der dem Wirkabschnitt 36 des Maschinenwerkzeugs in der Arbeitsrichtung vorgelagert ist, und in der Arbeitsrichtung 44 vor dem Wirkabschnitt 36 des Maschinenwerkzeugs angeordnet.

Die zweite Düse 91 ist auf einer dem Arbeitsfahrzeug 10 abgewandten Seite der ersten Düse 90 an das Blasluftregister 68 angeschlossen.

Die Düsen 90, 91 haben jeweils einen Strömungsleitkörper 81, der die Blasluft aus dem Blasluftregister 68 durch die Austrittsöffnungen 70, 72 in den dem Wirkabschnitt 36 der an der Rotorwelle befestigten Schlegel in der Arbeitsrichtung 44 vorgelagerten Abschnitt 52 des Arbeitsbereichs 46 des Arbeitsgeräts 16 lenkt.

Für das Größenverhältnis Q der Querschnittsfläche A2 der Austrittsöffnung 72 der zweiten Düse 91 zu der Querschnittsfläche A1 der Austrittsöffnung 70 der ersten Düse 91 gilt dabei:

$$Q = A2 \, / \, A1 \approx 60\%$$

Mittels des Gebläse-Turbinenrads 56 kann das Blasgerät 18 eine Blasluftströmung erzeugen, die mit einer Strömungsgeschwindigkeit von rund 160 m/s aus der Austrittsöffnung 70 der ersten Düse 90 und mit einer Strömungsgeschwindigkeit von rund 260 m/s aus der Austrittsöffnung 72 der zweiten Düse 91 mit einer schräg zu der Arbeitsrichtung 44 verlaufenden Strömungsrichtung 97 austritt.

Der Strömungsleitkörper 81 der Düse 90 bewirkt dabei, dass die mittlere Strömungsrichtung 97 der die Austrittsöffnung 70 durchsetzenden Blasluft unter dem Winkel $\alpha 1 \approx 70°$ zu der Arbeitsrichtung 44 in einer zu der Arbeitsrichtung 44 und der Rotorwellenachse 30 parallelen Ebene verläuft. Demgegenüber lenkt der Strömungsleitkörper 81 der Düse 91 die Blasluft in eine mittlere Strömungsrichtung 97, die in einer zu der Arbeitsrichtung 44 und der Rotorwellenachse 30 parallelen Ebene liegt und die mit der Arbeitsrichtung 44 dabei den Winkel $\alpha 2 \approx 80°$ einschließt.

Mittels des Blasgeräts 18 in der Geräteanordnung 15 wird hier die Blasluft für das Wegblasen von Kleinlebewesen aus dem Arbeitsbereich 46 aus den unterschiedlichen Austrittsöffnungen 70, 72 mit einer mittleren Strömungsrichtung 97 bereitgestellt, die ebenfalls unterschiedlich ist. Dabei ist der Winkel $\alpha 1$, $\alpha 2$, den die mittlere Strömungsrichtung 97 an einer Austrittöffnung 70, 72 mit der Arbeitsrichtung 44 bildet, umso größer, je größer der Abstand $A_{70}$, $A_{72}$ einer Austrittsöffnung 70, 72 von der dem Arbeitsfahrzeug 10 zugewandten Seite 99 des Arbeitsgeräts 16 ist. Diese Maßnahme bewirkt, dass bei einer Vorschubbewegung des Arbeitsgeräts 16 in der Arbeitsrichtung 44 Kleinlebewesen auf möglichst kurzen Wegen so aus dem Arbeitsbereich 46 auf die dem Arbeitsfahrzeug 10 abgewandte Seite des Arbeitsgeräts 16 geblasen werden, dass diese nicht in den Wirkabschnitt des Maschinenwerkzeugs in dem Arbeitsgerät 16 gelangen und dort Schaden nehmen können.

Zu bemerken ist, dass bei einer modifizierten Ausführungsform der Geräteanordnung 15 vorgesehen sein kann, dass der Winkel $\alpha 1$, $\alpha 2$, den die mittlere Strömungsrichtung 97 an einer Austrittöffnung 70, 72 mit der Arbeitsrichtung 44 bildet, umso größer ist, je größer der Abstand einer Austrittsöffnung 70, 72 von der dem Arbeitsfahrzeug 10 abgewandten Seite 101 des Arbeitsgeräts 16 ist.

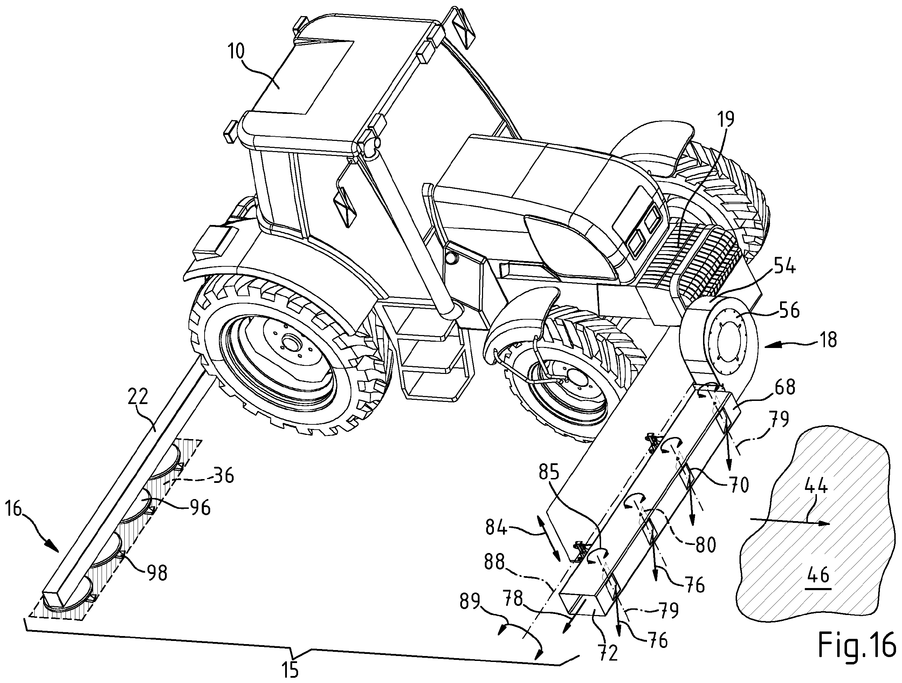

Die Fig. 16 zeigt das Arbeitsfahrzeug 10 mit einem an dessen Heck aufgenommenen Arbeitsgerät 16, das als ein Mähgerät für die Raufutterernte ausgebildet ist, und mit einem Blasgerät 18, welches das Arbeitsfahrzeug 10 an seiner Fronseite trägt. Soweit die Baugruppen und Elemente dieser Geräteanordnung 15 den Baugruppen und Elementen der anhand der Fig. 1 bis 13 beschriebenen Geräteanordnungen entsprechen, sind diese durch die gleichen Zahlen als Bezugszeichen kenntlich gemacht. Das Arbeitsgerät 16 enthält ein Maschinenwerkzeug 22 mit mehreren Drehtellern 96, an die Schneidmesser 98 für die Raufutterernte angeschlossen sind. Um zu vermeiden, dass Kleinlebewesen 50 bei der Raufutterernte in den Wirkabschnitt 36 des Maschinenwerkzeugs 22 gelangen, wenn das Arbeitsfahrzeug 10 mit dem Mähgerät durch den Arbeitsbereich 46 bewegt wird, ist an der Frontseite des Arbeitsfahrzeugs 10 ein Blasgerät 18 aufgenommen.

Das Blasgerät 18 enthält hier als Vorrichtung 54 für das Erzeugen einer Blasluftströmung ein Gebläse, in dem es ein mittels eines Elektromotors angetriebenes Gebläse-Turbinenrad 56 gibt. Bei dem Blasgerät 18 ist die Gebläse-Ausgangsöffnung direkt an ein Blasluftregister 68 angeschlossen, das mehrere frontseitige Austrittsöffnungen 70 für Blasluft und eine seitliche Austrittsöffnung 72 für Blasluft hat. Die mittels des Gebläses in dem Blasgerät 18 erzeugte Blasluft, die in dem Gebläse von der Gebläse-Ausgangsöffnung zu den Austrittsöffnungen 70, 72 geführt ist, kann aus diesen in den mittels der Pfeile 76, 78 kenntlich gemachten Richtungen austreten. Das Blasgerät 18 kann relativ zu dem Rahmen 19 des Arbeitsfahrzeugs 10 in der mittels des Doppelpfeils 84 kenntlich gemachten Richtung angehoben und abgesenkt werden sowie um eine horizontale Schwenkachse 88, wie mittels des Doppelpfeils 89 kenntlich gemacht, geschwenkt werden. Diese Maßnahme ermöglicht das Einstellen der Richtungen der aus den Austrittsöffnungen 70 austretenden Blasluft in Bezug auf den Rahmen 19 des Arbeitsfahrzeugs 10.

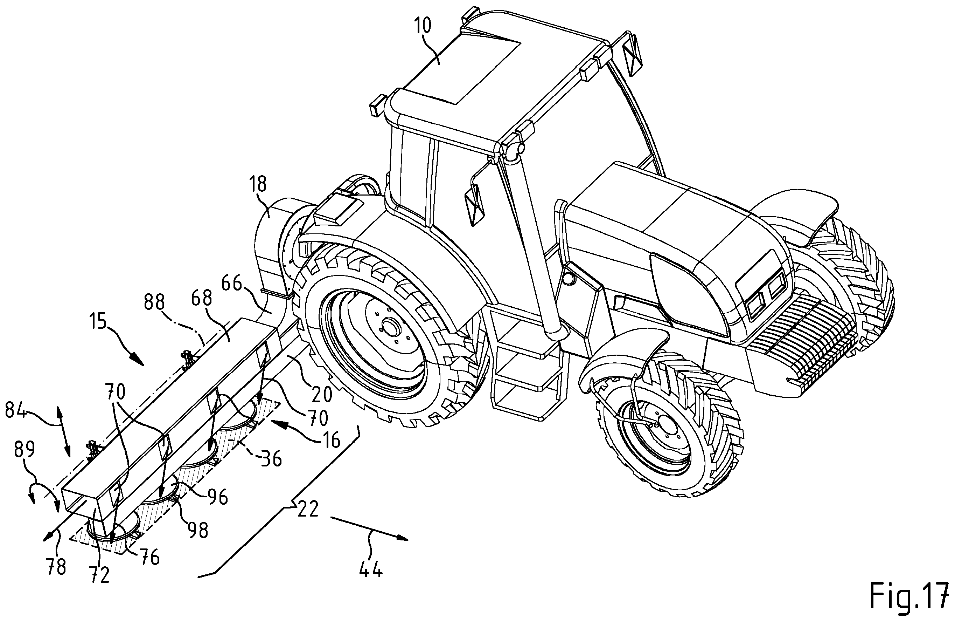

Die Fig. 17 zeigt das Arbeitsfahrzeug 10 mit einer weiteren Geräteanordnung 15, die ein Arbeitsgerät 16 aufweist, das als ein Mähgerät für die Raufutterernte ausgebildet ist, und ein Blasgerät 18 enthält. Das Arbeitsgerät 16 und das Blasgerät 18 sind hier an das Heck des Arbeitsfahrzeugs 10 angeschlossen.

Soweit die Baugruppen und Elemente dieser Geräteanordnung 15 den Baugruppen und Elementen der anhand der Fig. 1 bis 16 beschriebenen Geräteanordnungen entsprechen, sind diese durch die gleichen Zahlen als Bezugszeichen kenntlich gemacht. Das Arbeitsgerät 16 enthält ein Maschinenwerkzeug 22 mit mehreren Drehtellern 96, an die Schneidmesser 98 für die Raufutterernte angeschlossen sind. Um zu vermeiden, dass Kleinlebewesen bei der Raufutterernte in den Wirkabschnitt 36 des Maschinenwerkzeugs 22 gelangen, wenn das Arbeitsfahrzeug 10 mit dem Mähgerät durch den Arbeitsbereich 46 bewegt wird, enthält das Blasgerät 18 als Vorrichtung 54 für das Erzeugen einer Blasluftströmung ein Gebläse mit einer Gebläse-Ausgangsöffnung, die an eine mit einem Blasluftregister 68 kommunizierende Rohrleitung 66 angeschlossen ist. Das Blasluftregister 68 hat mehrere frontseitige Austrittsöffnungen 70 für Blasluft und eine seitliche Austrittsöffnung 72 für Blasluft.

Das Blasluftregister 68 ist hier über dem Maschinenwerkzeug 22 angeordnet und an einen Halterahmen 20 angeschlossen, der das Maschinenwerkzeug 22 trägt. Die mittels des Gebläses in dem Blasgerät 18 erzeugte Blasluft, die in dem Gebläse von der Gebläse-Ausgangsöffnung zu den Austrittsöffnungen 70, 72 geführt ist, kann hier aus diesen in den mittels der Pfeile 76, 78 kenntlich gemachten Richtungen in den dem Wirkabschnitt 36 des Maschinenwerkzeugs 22 in der Arbeitsrichtung 44 vorgelagerten Abschnitt 52 des Arbeitsbereichs 46 des Arbeitsgeräts 16 austreten.

Das Blasluftregister 68 kann an dem Halterahmen 20, der das Maschinenwerkzeug 22 trägt, in der mittels des Doppelpfeils 84 kenntlich gemachten Richtung angehoben und abgesenkt werden sowie um eine horizontale Schwenkachse 88, wie mittels des Doppelpfeils 89 kenntlich gemacht, geschwenkt werden. Diese Maßnahme ermöglicht das Einstellen der Richtungen der aus den Austrittsöffnungen 70 austretenden Blasluft in Bezug auf den Maschinenrahmen des Maschinenwerkzeugs 22.

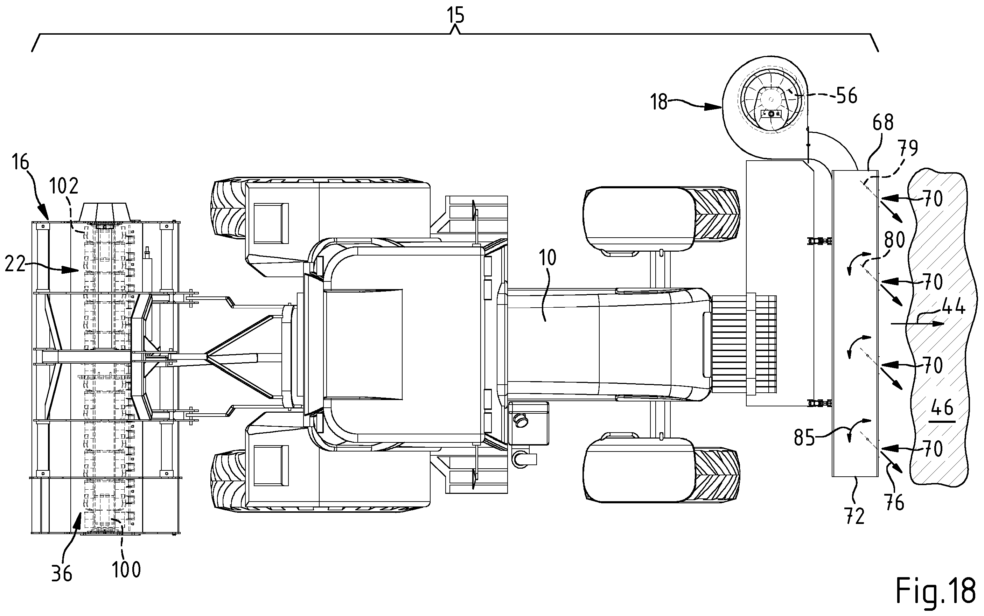

Die Fig. 18 zeigt das Arbeitsfahrzeug 10 mit einem an dessen Heck aufgenommenen Arbeitsgerät 16, das als eine Bodenfräse ausgebildet ist, und mit einem Blasgerät 18, welches das Arbeitsfahrzeug 10 an seiner Fronseite trägt. Soweit die Baugruppen und Elemente dieser Geräteanordnung 15 den Baugruppen und Elementen der anhand der Fig. 1 bis Fig. 17 beschriebenen Geräteanordnungen entsprechen, sind diese durch die gleichen Zahlen als Bezugszeichen kenntlich gemacht. Das Arbeitsgerät 16 enthält ein Maschinenwerkzeug 22, das einen Zinkenrotor 100 mit Zinken 102 aufweist. Um zu vermeiden, dass Kleinlebewesen 50 bei der Bodenbearbeitung in den Wirkabschnitt 36 des Maschinenwerkzeugs 22 gelangen, wenn das Arbeitsfahrzeug 10 in der mittels des Pfeils kenntlich gemachten Arbeitsrichtung 44 durch den Arbeitsbereich 46 bewegt wird, ist an der Frontseite des Arbeitsfahrzeugs 10 wiederum ein Blasgerät 18 aufgenommen. Das Blasgerät 18 enthält hier ein Gebläse, in dem es ein mittels eines Elektromotors angetriebenes Gebläse-Turbinenrad 56 gibt. Bei dem Blasgerät 18 ist die Gebläse-Ausgangsöffnung direkt an ein Blasluftregister 68 angeschlossen, das mehrere frontseitige Austrittsöffnungen 70 für Blasluft und eine seitliche Austrittsöffnung 72 für Blasluft hat. Die mittels des Gebläses in dem Blasgerät 18 erzeugte Blasluft, die in dem Gebläse von der Gebläse-Ausgangsöffnung zu den Austrittsöffnungen 70 geführt ist, kann aus diesen in den mittels der Pfeile 76 kenntlich gemachten Richtungen austreten.

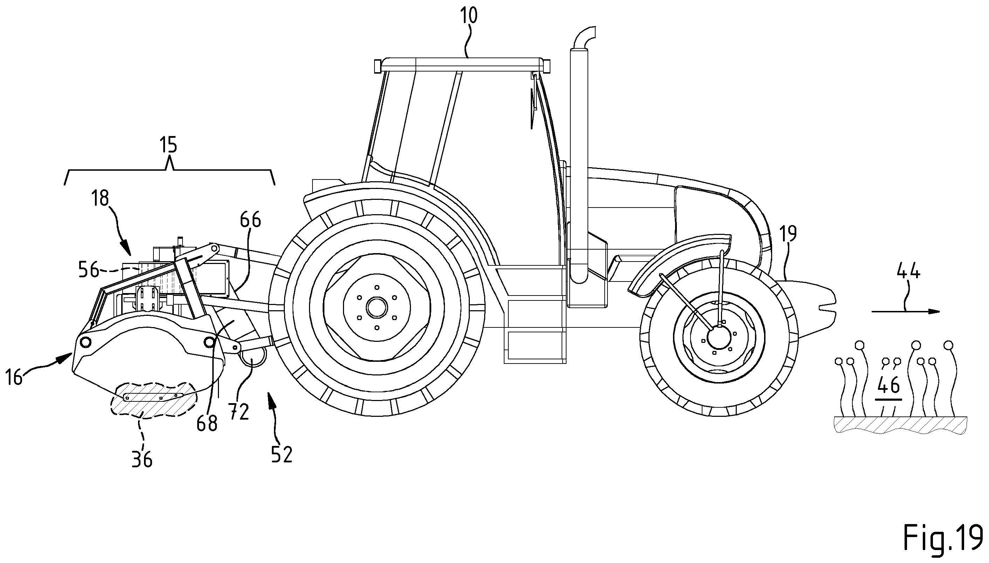

Die Fig. 19 zeigt das Arbeitsfahrzeug 10 mit einer Geräteanordnung 15 in Form eines heckseitig an dem Arbeitsfahrzeug 10 aufgenommenen Arbeitsgeräts 16 mit einem Maschinenwerkzeug, an das ein Blasgerät 18 angeschlossen ist. Soweit die Baugruppen und Elemente dieser Geräteanordnung 15 den Baugruppen und Elementen der anhand der Fig. 1 bis Fig. 15 beschriebenen Geräteanordnungen entsprechen, sind diese durch die gleichen Zahlen als Bezugszeichen kenntlich gemacht. Das Blasgerät 18 enthält hier wiederum ein Gebläse, in dem es ein mittels eines Elektromotors angetriebenes Gebläse-Turbinenrad 56 gibt. Das Blasgerät 18 hat einen Blasluftkanal 74, der durch eine Rohrleitung 66 zu einer Austrittsöffnung 72 geführt ist, durch die mittels des Gebläses erzeugte Blasluft als ein Blasluftstrom freigesetzt werden kann, der den dem Wirkabschnitt 36 in der mittels des Pfeils kenntlich gemachten Arbeitsrichtung 44 des Mulchgeräts vorgelagerten Abschnitt 52 des Arbeitsbereichs 46 auf einer der Arbeitsbreite des Maschinenwerkzeugs entsprechenden Breite von Kleinlebewesen 50 freibläst, so dass diese nicht durch das Maschinenwerkzeug in dem Arbeitsgerät 16 geschädigt werden.

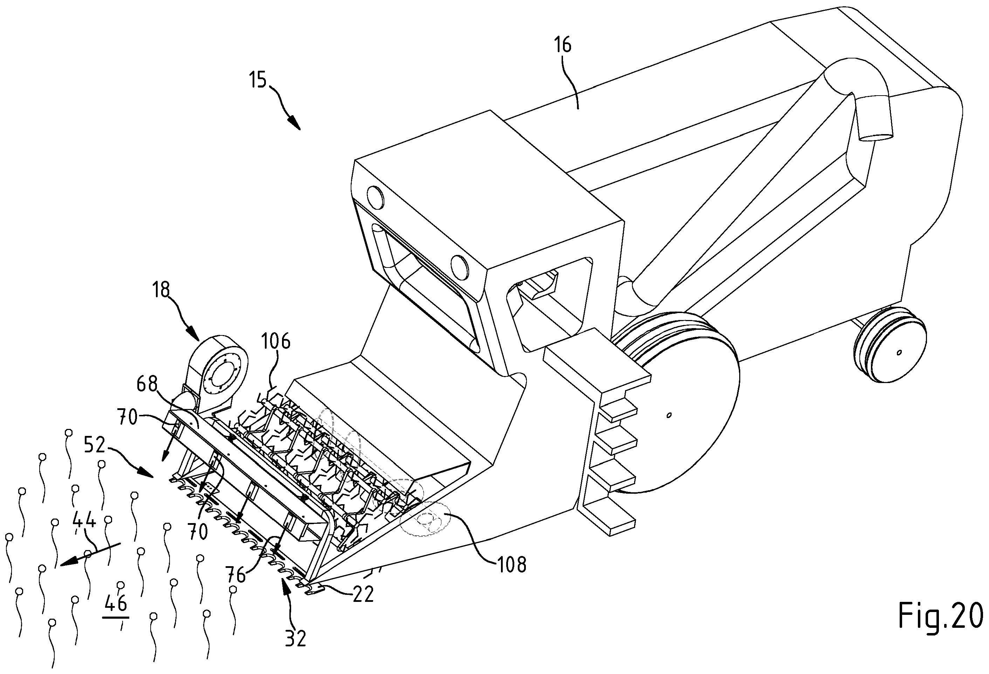

Die Fig. 20 ist eine perspektivische Ansicht einer Geräteanordnung 15 mit einem als Mähdrescher ausgebildeten Arbeitsgerät 16, an das ein Blasgerät 18 angeschlossen ist. Soweit die Baugruppen und Elemente dieser Geräteanordnung 15 den Baugruppen und Elementen der anhand der Fig. 1 bis 16 beschriebenen Geräteanordnungen entsprechen, sind diese durch die gleichen Zahlen als Bezugszeichen kenntlich gemacht. Der Mähdrescher enthält ein Maschinenwerkzeug 22 mit einem hydraulisch angetriebenen Messerbalken und hat eine Haspel 106, die mittels des Messerbalkens von ihren Halmen abgetrennte Pflanzen in ein Fördersystem 108 bewegt, das die mittels des Maschinenwerkzeugs 22 von ihren Halmen abgeschnittenen Pflanzen einem Dreschsystem zuführt.

Um zu vermeiden, dass Kleinlebewesen beim Bewegen des Mähdreschers in der mittels des Pfeils kenntlich gemachten Arbeitsrichtung 44 durch einen Arbeitsbereich 46 an dem Messerbalken des Maschinenwerkzeugs 22 Schaden nehmen können, wird hier mittels des Blasgeräts 18 mit einem Blasluftregister 68 eine Blasluftströmung in einer den Pfeilen 76 entsprechenden Richtung erzeugt, die Schräg zu der Arbeitsrichtung verläuft und die den vor dem Wirkabschnitt 36 des Maschinenwerkzeugs 22 in der Arbeitsrichtung vorgelagerten Abschnitt 52 des Arbeitsbereichs 46 mit quer zu der Arbeitsrichtung 44 gerichteter Blasluft von Kleinlebewesen freibläst, so dass diese nicht durch den Mähdrescher geschädigt werden.

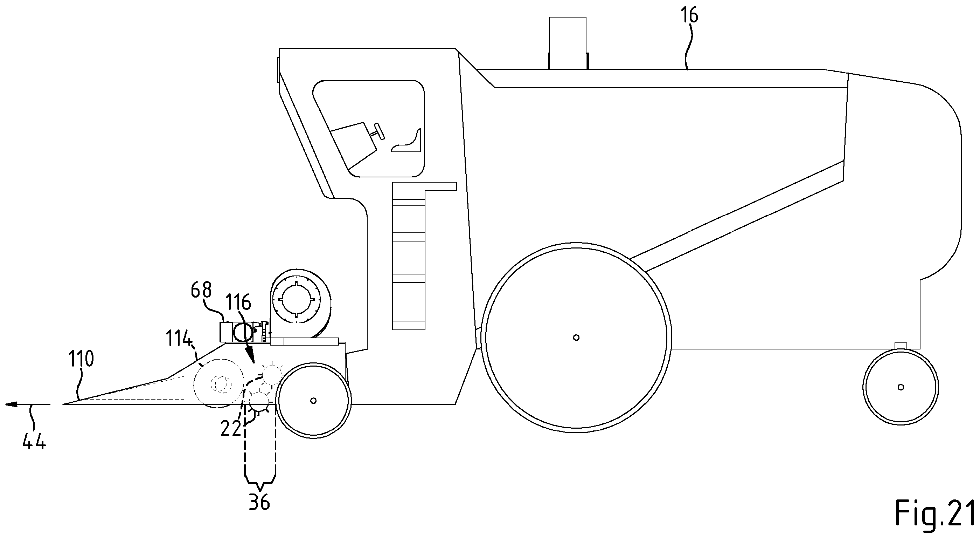

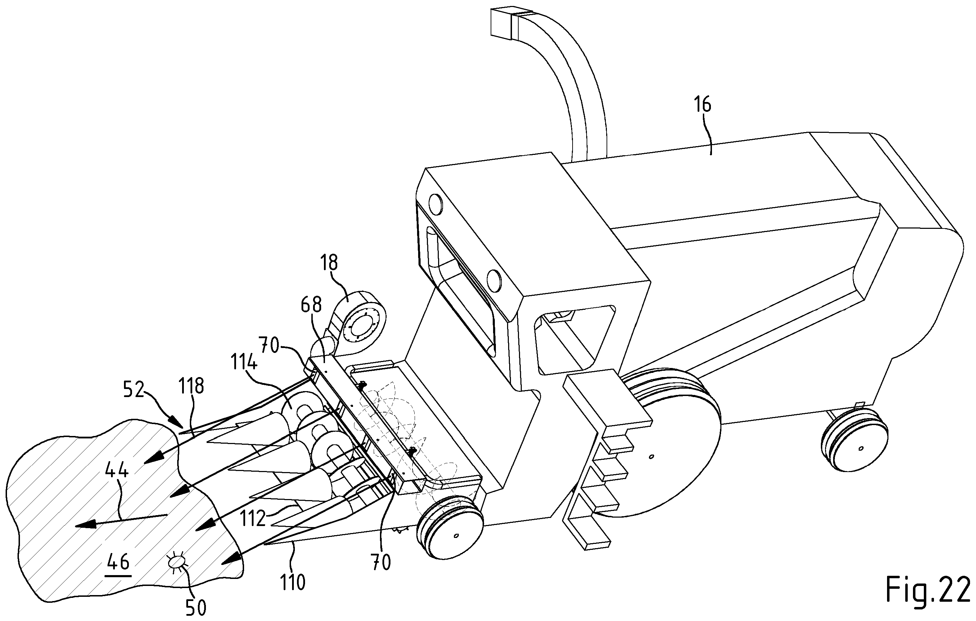

Die Fig. 21 ist eine weitere Seitenansicht einer Geräteanordnung 15 mit einem als ein Maishäcksler ausgebildeten Arbeitsgerät 16, das mit einem Blasgerät 18 kombiniert ist. Die Fig. 22 zeigt eine perspektivische Ansicht der Geräteanordnung 15. Soweit die Baugruppen und Elemente dieser Geräteanordnung 15 den Baugruppen und Elementen der anhand der Fig. 1 bis 20 beschriebenen Geräteanordnungen entsprechen, sind diese durch die gleichen Zahlen als Bezugszeichen kenntlich gemacht. Der Maishäcksler hat einen Erntevorsatz 110 mit einem Messerbalken 112 und enthält ein erstes Schneckensystem 114, das mittels des Messerbalkens 112 abgeschnittene Pflanzen einem Häcksler 116 zuführt, der ein Maschinenwerkzeug 22 mit Häckseltrommeln aufweist, die Schneidwerkzeuge tragen. Um zu vermeiden, dass Kleinlebewesen beim Bewegen des Maishäckslers in der mittels des Pfeils kenntlich gemachten Arbeitsrichtung 44 durch einen Arbeitsbereich 46 in dem Maschinenwerkzeug 22 Schaden nehmen können, wird hier mittels des Blasgeräts 18 mit einem Blasluftregister 68 eine Blasluftströmung erzeugt, die den vor dem Wirkabschnitt 36 des Maschinenwerkzeugs 22 in der Arbeitsrichtung vorgelagerten Abschnitt 52 des Arbeitsbereichs 46 in der mittels der Pfeile kenntlich gemachten Richtung 118 mittels Blasluft von Kleinlebewesen 50 freibläst, so dass diese nicht durch den Mähdrescher geschädigt werden.

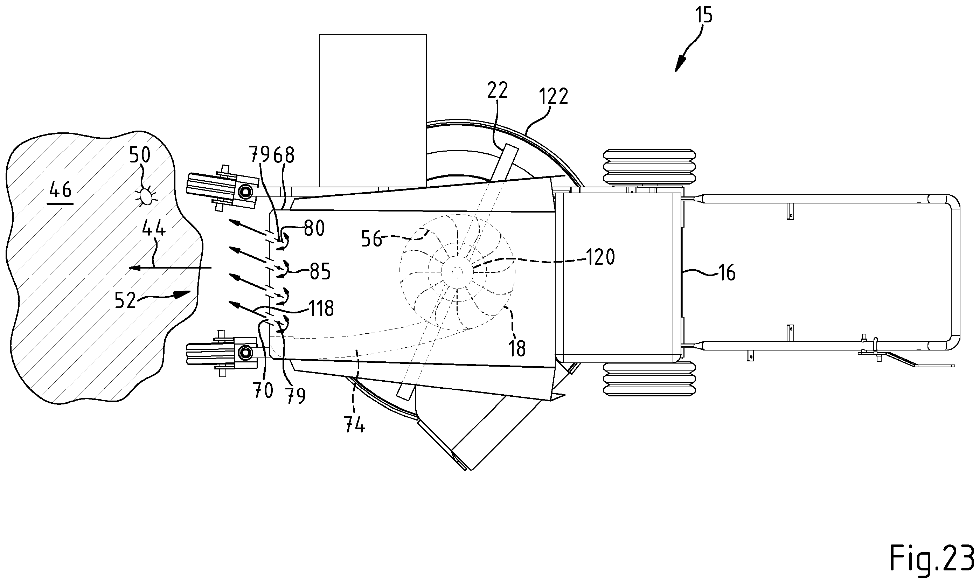

Die Fig. 23 zeigt eine Geräteanordnung 15 für das Rasenmähen mit einem Arbeitsgerät 16, das als ein handgeführter Rasenmäher ausgebildet ist. Der Rasenmäher hat einen elektrischen Antriebsmotor 120, der mittels einer Antriebswelle als Maschinenwerkzeug 22 ein Schneidmesser antreibt. Soweit die Baugruppen und Elemente dieser Geräteanordnung 15 den Baugruppen und Elementen der anhand der Fig. 1 bis 22 beschriebenen Geräteanordnungen entsprechen, sind diese durch die gleichen Zahlen als Bezugszeichen kenntlich gemacht. Die Geräteanordnung 15 weist ein Blasgerät 18 mit einem Gebläse-Turbinenrad 56 auf, das über dem Antriebsmotor 120 auf der dem Schneidmesser abgewandten Seite angeordnet ist. Durch einen Blasluftkanal 74, der in ein das Schneidmesser abdeckendes Gehäuse 122 integriert ist und der in ein Blasluftregister 68 mit mehreren Austrittsöffnungen 70 für Blasluft mündet, wird beim Rotieren des Schneidmessers über das Gebläse-Turbinenrad 56 eine Blasluftströmung erzeugt, die den vor dem Wirkabschnitt 36 des Maschinenwerkzeugs 22 in der mittels des Pfeils kenntlich gemachten Arbeitsrichtung 44 vorgelagerten Abschnitt 52 des Arbeitsbereichs 46 von Kleinlebewesen mit in der Richtung 118 strömender Blasluft freibläst, so dass diese bei Rasenmähen nicht durch das Maschinenwerkzeug 22 geschädigt werden.

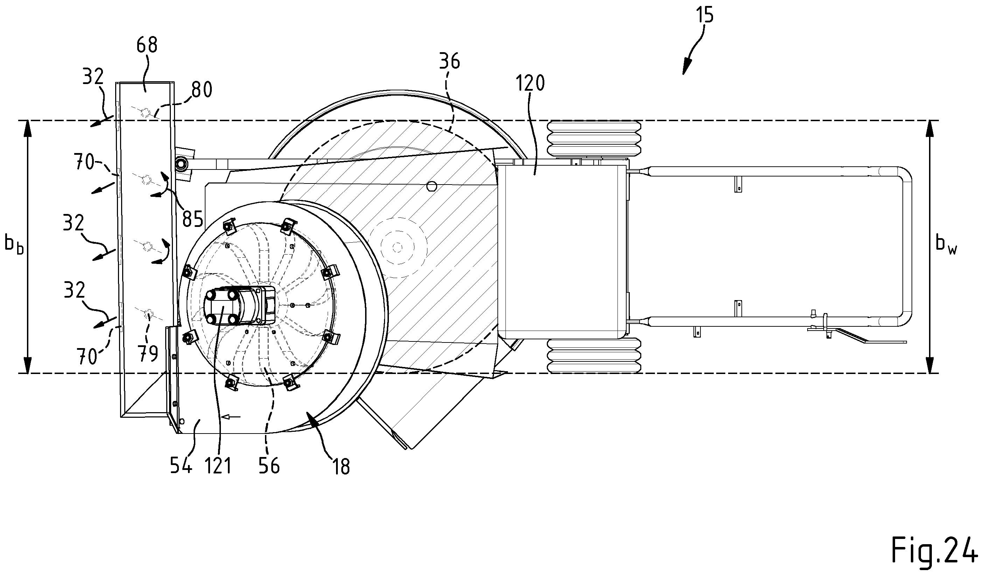

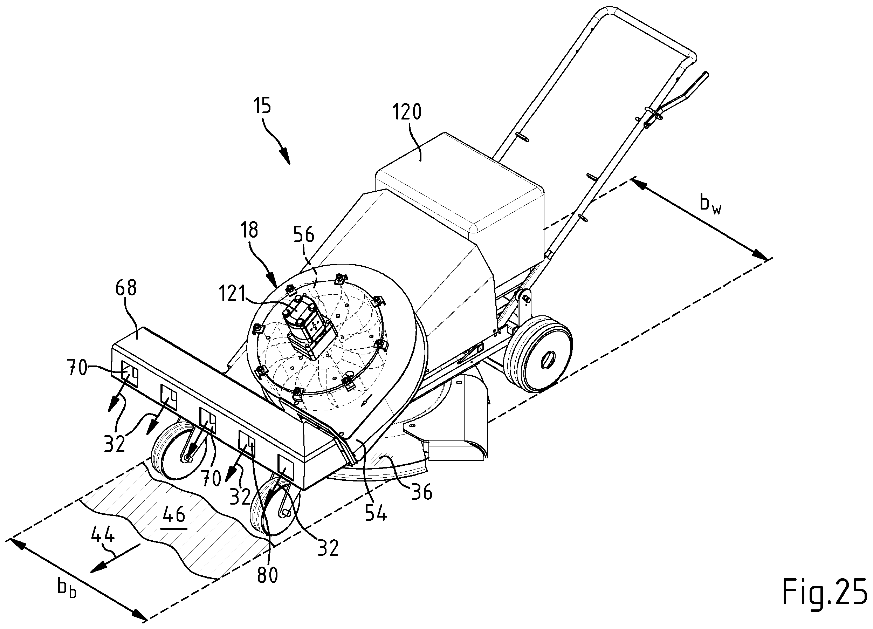

Die Fig. 24 und die Fig. 25 zeigen eine weitere Geräteanordnung 15 für das Rasenmähen mit einem Arbeitsgerät 16, das als ein handgeführter Rasenmäher ausgebildet ist. Soweit die Baugruppen und Elemente dieser Geräteanordnung 15 den Baugruppen und Elementen der anhand der Fig. 1 bis 23 beschriebenen Geräteanordnungen entsprechen, sind diese durch die gleichen Zahlen als Bezugszeichen kenntlich gemacht. Die Geräteanordnung 15 weist ein Blasgerät 18 mit einer als ein Gebläse ausgebildeten Vorrichtung 54 für das Erzeugen einer Blasluftströmung auf, die ein Gebläse-Turbinenrad 56 enthält, für dessen Antrieb ein von dem Antriebsmotor 120 der Schneidmesser verschiedener elektrischer Antriebsmotor 121 vorgesehen ist. Das Gebläse ist hier direkt an ein Blasluftregister 68 angeschlossen. Das Blasluftregister 68 weist mehrere Austrittsöffnungen 70 für Blasluft auf, die den dem Wirkabschnitt 36 des Maschinenwerkzeugs 22 in der Arbeitsrichtung 44 vorgelagerten Abschnitt 52 des Arbeitsbereichs 46 des Arbeitsgeräts 16 auf einer der Arbeitsbreite $b_w$ des Maschinenwerkzeugs 22 entsprechenden Breite $b_b$ in einer quer zu der Arbeitsrichtung 44 verlaufenden Richtung 32 überstreicht, um Kleinlebewesen aus diesem wegzublasen. Auf diese Weise wird erreicht, dass diese beim Rasenmähen nicht durch das Maschinenwerkzeug 22 geschädigt werden.

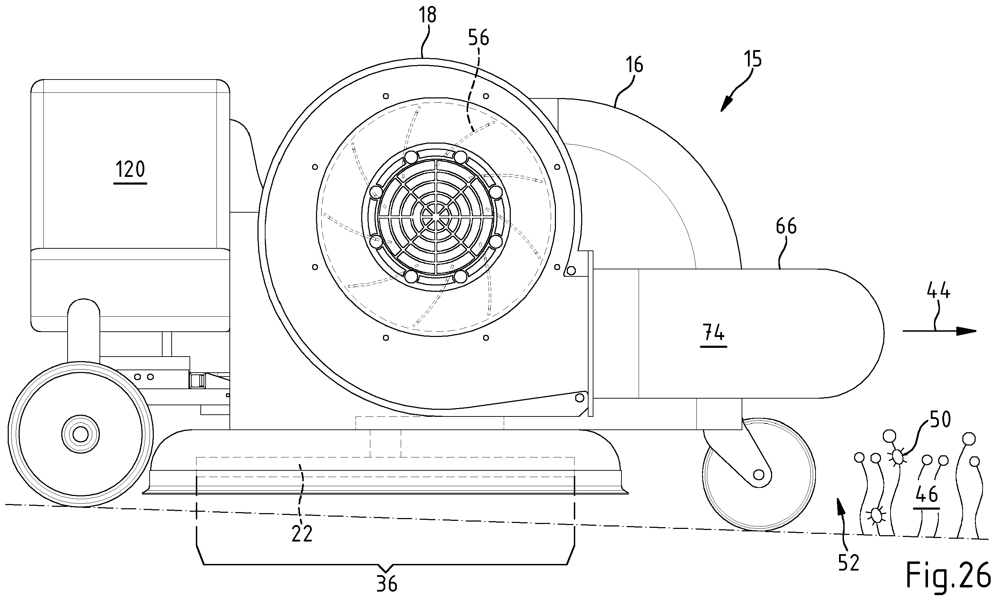

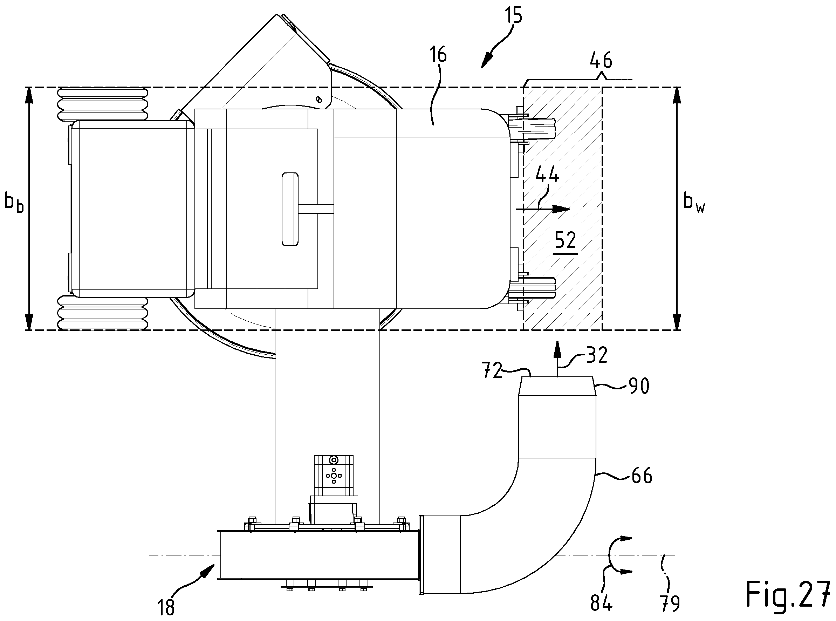

Die Fig. 26 zeigt als Seitenansicht eine weitere Geräteanordnung 15 für das Rasenmähen mit einem selbstfahrenden Arbeitsgerät 16 in Form eines Aufsitzmähers, der einen Antriebsmotor 120 hat, der mittels einer Antriebswelle als ein Maschinenwerkzeug 22 ein Schneidmesser antreibt. Soweit die Baugruppen und Elemente dieser Geräteanordnung 15 den Baugruppen und Elementen der anhand der Fig. 1 bis Fig. 25 beschriebenen Geräteanordnungen entsprechen, sind diese durch die gleichen Zahlen als Bezugszeichen kenntlich gemacht. Die Fig. 27 ist eine Draufsicht dieser Geräteanordnung. Die Geräteanordnung 15 weist ein Blasgerät 18 mit einem Gebläse-Turbinenrad 56 auf, das über ein Getriebe mit der Antriebswelle des Maschinenwerkzeugs 22 gekoppelt ist. Das Blasgerät 18 erzeugt beim Betreiben des Maschinenwerkzeugs 22 einen Blasluftstrom, der durch einen Blasluftkanal 74 in einer um eine Schwenkachse 79 entsprechend dem Doppelpfeil 84 verschwenkbare Rohrleitung 66 zu einer Düse 90 geführt ist. Die mittels des Blasgeräts 16 bereitgestellte Blasluft überstreicht so den dem Wirkabschnitt 36 des Maschinenwerkzeugs 22 in der Arbeitsrichtung 44 vorgelagerte Abschnitt 52 des Arbeitsbereichs 46 des Arbeitsgeräts 16 auf einer der Arbeitsbreite $b_w$ des Maschinenwerkzeugs 22 entsprechenden Breite $b_b$ in einer quer zu der Arbeitsrichtung 44 verlaufenden Richtung 32. Die aus der Rohrleitung 66 austretende Blasluft ermöglicht das Freiblasen des dem Wirkabschnitt 36 des Maschinenwerkzeugs 22 in der mittels des Pfeils kenntlich gemachten Arbeitsrichtung 44 vorgelagerten Abschnitts 52 des Arbeitsbereichs 46. Kleinlebewesen 50 werden dann aus dem Abschnitt 52 des Arbeitsbereichs 46 weggeblasen. Damit wird vermieden, dass diese durch das Maschinenwerkzeug 22 beim Rasenmähen geschädigt werden.

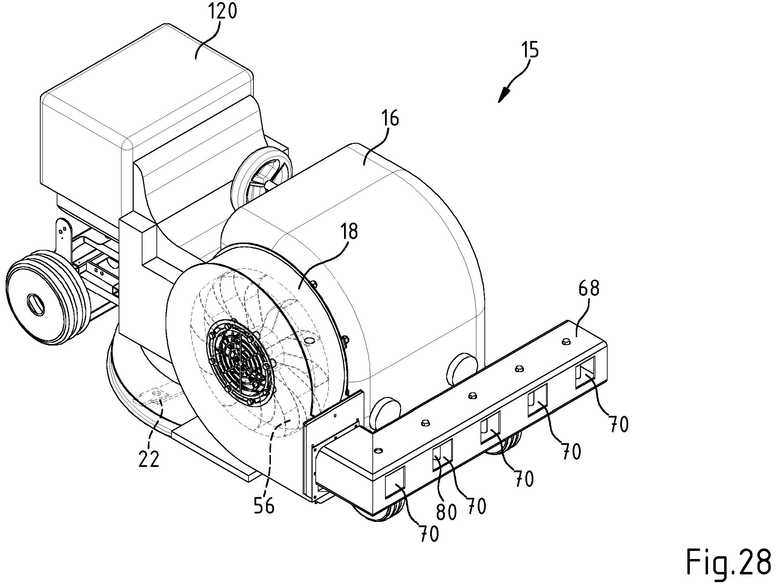

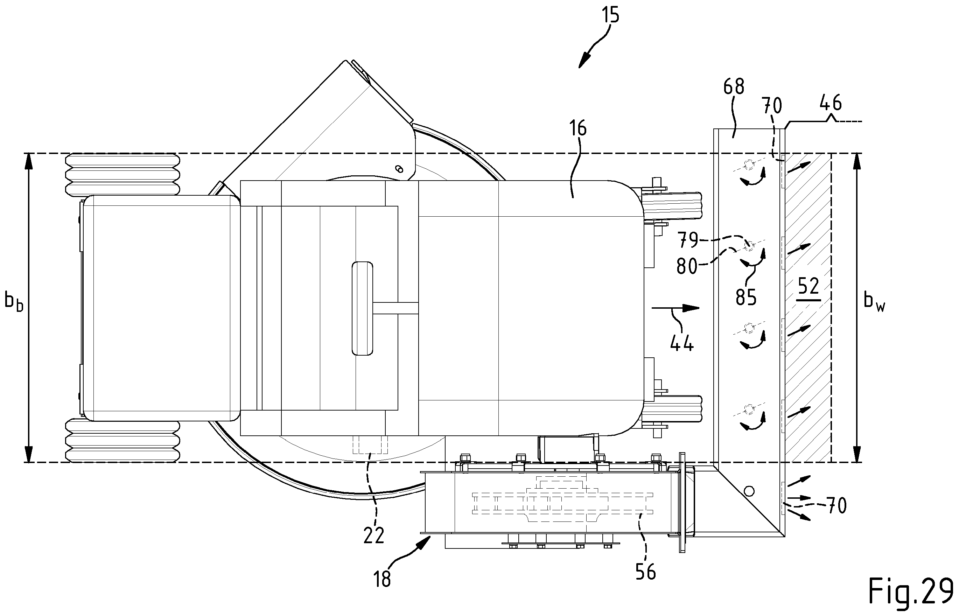

Die Fig. 28 zeigt eine weitere Geräteanordnung 15 für das Rasenmähen mit einem selbstfahrenden Arbeitsgerät 16 in Form eines Aufsitzmähers, der einen Antriebsmotor 120 hat, der mittels einer Antriebswelle als ein Maschinenwerkzeug 22 ein Schneidmesser antreibt. Die Fig. 29 ist eine Draufsicht dieser Geräteanordnung. Soweit die Baugruppen und Elemente dieser Geräteanordnung 15 den Baugruppen und Elementen der anhand der Fig. 1 bis 27 beschriebenen Geräteanordnungen entsprechen, sind diese durch die gleichen Zahlen als Bezugszeichen kenntlich gemacht. Die Geräteanordnung 15 weist ebenfalls ein Blasgerät 18 mit einem Gebläse-Turbinenrad 56 auf, das über ein Getriebe mit der Antriebswelle des Maschinenwerkzeugs 22 gekoppelt ist. Das Blasgerät 18 erzeugt beim Betreiben des Maschinenwerkzeugs 22 einen Blasluftstrom, der in ein Blasluftregister 68 geführt ist, das mehrere Austrittsöffnungen 70 für Blasluft hat. Die Blasluft überstreicht hier den dem Wirkabschnitt 36 des Maschinenwerkzeugs 22

in der Arbeitsrichtung 44 vorgelagerten Abschnitt 52 des Arbeitsbereichs 46 des Arbeitsgeräts 16 auf einer der Arbeitsbreite $b_w$ des Maschinenwerkzeugs 22 entsprechenden Breite $b_b$ in einer quer zu der Arbeitsrichtung 44 verlaufenden Richtung, um Kleinlebewesen aus diesem wegzublasen. Auf diese Weise wird erreicht, dass diese bei Rasenmähen nicht durch das Maschinenwerkzeug 22 geschädigt werden.

Zu bemerken ist, dass das Arbeitsgerät in einer erfindungsgemäßen Geräteanordnung auch als ein Spritzgerät ausgebildet sein kann, das ein Maschinenwerkzeug enthält, das auf Pflanzen eine Flüssigkeit für die Schädlingsbekämpfung spritzt, um z. B. die Oberfläche der Pflanzen für darauf angesiedelte Schädlinge unattraktiv oder gar unbewohnbar zu machen. Indem mittels eines Blasgeräts in der Geräteanordnung Kleinlebewesen durch Erzeugen einer Luftströmung aus einem dem Wirkbereich des Maschinenwerkzeugs des Spritzgeräts in der Arbeitsrichtung vorgelagerten Abschnitt des Arbeitsbereichs von den Pflanzen abgeblasen werden, lässt sich vermeiden, dass diese mit der Flüssigkeit für die Schädlingsbekämpfung in Kontakt geraten und hierdurch Schaden nehmen.

Zusammenfassend sind insbesondere folgende bevorzugte Merkmale der Erfindung festzuhalten:

Eine Geräteanordnung 15 enthält ein Arbeitsgerät 16, das ein Maschinenwerkzeug 22 für einen Arbeitsgang aus der Gruppe Grünpflege, Mulchen, Mähen, Bodenbearbeitung, Raufutterernte, Körnerfruchternte und Spritzen aufweist, das einen in einer Arbeitsrichtung 44 durch einen Arbeitsbereich 46 bewegbaren Wirkabschnitt 36 hat. In der Geräteanordnung 15 gibt es ein Blasgerät 48 für das Wegblasen von Kleinlebewesen 50 aus einem dem Wirkabschnitt 36 des Maschinenwerkzeugs 22 in der Arbeitsrichtung 44 vorgelagerten Abschnitt 52 des Arbeitsbereichs 46.

Das Blasgerät 18 kann dabei einen Blasluftkanal 74 für das Führen einer Blasluftströmung zu wenigstens einer Austrittsöffnung 70, 72 aufweisen, die für das Austreten von durch den in der Arbeitsrichtung 44 dem Wirkabschnitt 36 des Maschinenwerkzeugs 22 in dem Arbeitsgerät 16 vorgelagerten Abschnitt 52 des Arbeitsbereichs 46 strömender Blasluft dient.

Insbesondere kann das Blasgerät 18 eine Vorrichtung für das Erzeugen einer Blasluftströmung aufweisen, die in dem Blasluftkanal 74 zu der wenigstens einen Austrittsöffnung 70, 72 verläuft.

Das Blasgerät 18 kann dabei wenigstens ein Leitmittel für das Leiten der Blasluftströmung durch die wenigstens eine Austrittsöffnung 70, 72 mit einer quer oder schräg zu der Arbeitsrichtung 44 verlaufenden Strömungsrichtung enthalten.

Es ist möglich, dass das wenigstens eine Leitmittel für das Leiten der Blasluftströmung durch die wenigstens eine Austrittsöffnung 70, 72 eine Düse 90 umfasst und/oder dass das wenigstens eine Leitmittel für das Leiten der Blasluftströmung durch die wenigstens eine Austrittsöffnung 70, 72 ein in dem Blasluftkanal 74 angeordnetes Leitblech 80 aufweist.

Das wenigstens eine Leitmittel kann dabei verstellbar sein.

Die Geräteanordnung kann einen Halterahmen 20 aufweisen, an dem ein Umlenkgetriebe 38 festgelegt ist, das eine Schnittstelle 14 zum Anschließen einer Gelenkwelle für das Verbinden mit einem Gelenkwellenantrieb eines Arbeitsfahrzeugs 10 hat, das einen ersten mit einem ersten Getriebe für das Antreiben des Maschinenwerkzeugs 22 in dem Arbeitsgerät 16 drehgekoppelten Abtrieb hat und das einen zweiten, mit einem zweiten Getriebe für das Antreiben der Vorrichtung für das Erzeugen einer Blasluftströmung in dem Blasluftkanal 74 des Blasgeräts 18 hat.

Die Geräteanordnung kann einen Elektromotor 120 oder einen Hydraulikmotor 93 für das Antreiben der Vorrichtung für das Erzeugen einer Blasluftströmung in dem Blasluftkanal 74 des Blasgeräts enthalten.

Der Blasluftkanal 74 des Blasgeräts 18 in der Geräteanordnung kann durch eine Blasluftleitung mit einem Blasluftregister 68 kommunizieren, das mehrere Austrittsöffnungen 70, 72 für das Austreten von durch den in der Arbeitsrichtung 44 dem Wirkabschnitt 36 des Maschinenwerkzeugs 22 in dem Arbeitsgerät 16 vorgelagerten Abschnitt 52 des Arbeitsbereichs 46 strömender Blasluft aufweist.

Das Blasluftregister 68 kann für das Einstellen der Richtung der aus der wenigstens einen Austrittsöffnung 70, 72 austretenden Blasluft relativ zu dem Arbeitsgerät 16 um eine Schwenkachse 88 verschwenkt werden.

Das Arbeitsgerät 16 kann ein Arbeitsgerät aus der Gruppe Mähdrescher, Maishäcksler, Mulchgerät, Mähgerät oder Bodenfräse sein.

Das Blasgerät 18 kann an einem Halterahmen 20 für das Halten des Maschinenwerkzeugs 22 in dem Arbeitsgerät 16 festgelegt sein.

Ein Arbeitsfahrzeug 10 kann eine vorstehend beschriebene Geräteanordnung 15 für das Bewegen des Wirkabschnitts 36 des Maschinenwerkzeugs 22 des Arbeitsgeräts 16 durch den Arbeitsbereich 46 in der Arbeitsrichtung 44 aufweisen.

Das Arbeitsfahrzeug 10 kann einen Arbeitsfahrzeugrahmen 19 enthalten, an dem das Blasgerät 18 bezogen auf die Arbeitsrichtung 44 frontseitig und das Arbeitsgerät 16 heckseitig aufgenommen ist.

In einem Verfahren zum Ausführen eines Arbeitsgangs aus der Gruppe Grünpflege, Mähen, Mulchen, Bodenbearbeitung, Raufutterernte, Körnerfruchternte und Spritzen, wird ein Maschinenwerkzeug 22, das einen Wirkabschnitt 36 hat, in einer Arbeitsrichtung 44 durch einen Arbeitsbereich 46 bewegt, wobei Kleinlebewesen 50 aus einer dem Wirkabschnitt 36 des Maschinenwerkzeugs 22 in der Arbeitsrichtung 44 vorgelagerten Abschnitt 52 des Arbeitsbereichs 46 mittels eines gasförmigen Fluidstroms weggeblasen werden.

**Bezugszeichenliste**

| | |
|---|---|
| 10 | Arbeitsfahrzeug |
| 12 | Fronthubwerk |
| 14 | Schnittstelle |
| 15 | Geräteanordnung |
| 16 | Arbeitsgerät |
| 17 | Arbeitsebene |
| 18 | Blasgerät |
| 19 | Arbeitsfahrzeugrahmen |
| 20 | Halterahmen |
| 22 | Maschinenwerkzeug |
| 24 | Rotorwelle |
| 26 | Werkzeug |
| 28 | Rotorwellenträger |
| 30 | Rotorwellenachse |
| 32 | Richtung |
| 34 | Schwenkachse |
| 36 | Wirkabschnitt |
| 38 | Umlenkgetriebe |
| 40 | Zapfwelle |
| 42 | Antriebswelle |
| 44 | Arbeitsrichtung |
| 46 | Arbeitsbereich |
| 48 | Blasgerät |
| 50 | Kleinlebewesen |
| 52 | Abschnitt |
| 54 | Vorrichtung für das Erzeugen einer Blasluftströmung |
| 56 | Gebläse-Turbinenrad |
| 58 | Turbinenschaufel |
| 60 | Übersetzungsgetriebe |
| 62 | Ansaugöffnung |
| 63 | Gebläse-Ausgangsöffnung |
| 64 | Pfeil |
| 66 | Rohrleitung |
| 68 | Blasluftregister |
| 70, 72 | Austrittsöffnung |
| 73 | Düsenkörper |
| 74 | Blasluftkanal |
| 75 | Kugelgelenk |
| 77 | Schwenkgelenk |
| 76, 78 | Pfeil |
| 79 | Schwenkachse |
| 80 | Leitblech |
| 81 | Strömungsleitkörper |
| 82 | Linearführung |
| 84, 85, 89 | Doppelpfeil |
| 86 | Schwenkgelenk |
| 88 | Schwenkachse |
| 90, 91 | Düse |
| 92 | Schutzabdeckung |
| 93 | Hydraulikmotor |
| 94 | Auslegerarm |
| 95 | Auslegerarm-Basis |
| 96 | Drehteller |

| | |
|---|---|
| 97 | Strömungsrichtung |
| 98 | Schneidmesser |
| 99, 101 | Seite |
| 100 | Zinkenrotor |
| 102 | Zinken |
| 106 | Haspel |
| 108 | Fördersystem |
| 110 | Erntevorsatz |
| 112 | Messerbalken |
| 114 | erstes Schneckensystem |
| 116 | Häcksler |
| 118 | Richtung |
| 120, 121 | elektrischer Antriebsmotor |
| 122 | Gehäuse |

**Patentansprüche**

1. Geräteanordnung (15) mit einem Arbeitsgerät (16), das ein Maschinenwerkzeug (22) für einen Arbeitsgang aus der Gruppe Grünpflege, Mulchen, Mähen, Bodenbearbeitung, Raufutterernte, Körnerfruchternte und Spritzen aufweist, das einen in einer Arbeitsrichtung (44) durch einen Arbeitsbereich (46) des Arbeitsgeräts bewegbaren Wirkabschnitt (36) hat, und

   mit einem Blasgerät (18) zum Bereitstellen von Blasluft in einem dem Wirkabschnitt (36) des Maschinenwerkzeugs (22) in der Arbeitsrichtung (44) vorgelagerten Abschnitt (52) des Arbeitsbereichs (46),
   **dadurch gekennzeichnet, dass**
   die Blasluft für das Wegblasen von Kleinlebewesen (50) den dem Wirkabschnitt (36) des Maschinenwerkzeugs (22) in der Arbeitsrichtung (44) vorgelagerten Abschnitt (52) des Arbeitsbereichs (46) des Arbeitsgeräts (16) mindestens auf einer der Arbeitsbreite $b_w$ des Maschinenwerkzeugs (22) entsprechenden Breite $b_b$ in einer quer zu der Arbeitsrichtung (44) verlaufenden Richtung (32) überstreicht, die nur zu einer Seite des Arbeitsbereichs (46) weist.

2. Geräteanordnung nach Anspruch 1, **dadurch gekennzeichnet, dass** das Blasgerät (18) ein Blasluftregister (68) hat, das mehrere Austrittsöffnungen (70, 72) für das Ausströmen der Blasluft in den dem Wirkabschnitt (36) des Maschinenwerkzeugs (22) in der Arbeitsrichtung (44) vorgelagerten Abschnitt (52) des Arbeitsbereichs (46) des Arbeitsgeräts (16) aufweist.

3. Geräteanordnung nach Anspruch 1, **dadurch gekennzeichnet, dass** das Blasgerät (18) für das Wegblasen von Kleinlebewesen (50) ein Gebläse mit einem Gehäuse enthält, das eine Ansaugöffnung (62) für das Ansaugen der Blasluft hat und das eine Gebläse-Ausgangsöffnung (63) aufweist, die mittels einer Rohrleitung (66) an ein Blasluftregister (68) angeschlossen ist, das mehrere Austrittsöffnungen (70, 72) für das Ausströmen der Blasluft in den dem Wirkabschnitt (36) des Maschinenwerkzeugs (22) in der Arbeitsrichtung (44) vorgelagerten Abschnitt (52) des Arbeitsbereichs (46) des Arbeitsgeräts (16) aufweist.

4. Geräteanordnung (15) nach Anspruch 2 oder 3, **dadurch gekennzeichnet, dass** das Blasluftregister (68) für das Einstellen der Richtung der aus der wenigstens einen Austrittsöffnung (70, 72) austretenden Blasluft relativ zu dem Arbeitsgerät (16) verstellt werden kann, und/oder dass das Blasgerät (18) wenigstens ein Leitmittel für das Leiten der Blasluftströmung durch wenigstens eine der Austrittsöffnungen (70, 72) mit einer quer oder schräg zu der Arbeitsrichtung (44) verlaufenden mittleren Strömungsrichtung (97) enthält und/oder dass das Blasgerät (18) zum Bereitstellen der Blasluft für das Wegblasen von Kleinlebewesen (50) durch unterschiedlichen Austrittsöffnungen (70, 72) mit mittleren Strömungsrichtungen (97) eingerichtet ist, die ausgehend von einer einem Arbeitsfahrzeug (10) zugewandten oder abgewandten Seite (99, 101) des Arbeitsgeräts (16) mit der Arbeitsrichtung (44) einen Winkel ($\alpha1$, $\alpha2$) einschließen, der mit wachsendem Abstand der Austrittsöffnungen (70, 72) von der dem Arbeitsfahrzeug (10) zugewandten oder abgewandten Seite (99, 101) zunimmt.

5. Geräteanordnung (15) mit einem Arbeitsgerät (16), das ein Maschinenwerkzeug (22) für einen Arbeitsgang aus der Gruppe Grünpflege, Mulchen, Mähen, Bodenbearbeitung, Raufutterernte, Körnerfruchternte und Spritzen aufweist, das einen in einer Arbeitsrichtung (44) durch einen Arbeitsbereich (46) des Arbeitsgeräts bewegbaren Wirkabschnitt (36) hat, und

   mit einem Blasgerät (18) zum Bereitstellen von Blasluft in einem dem Wirkabschnitt (36) des Maschinenwerkzeugs (22) in der Arbeitsrichtung (44) vorgelagerten Abschnitt (52) des Arbeitsbereichs (46),
   **dadurch gekennzeichnet, dass**
   dass das Blasgerät (18) zum Bereitstellen der Blasluft für das Wegblasen von Kleinlebewesen (50) durch unterschiedliche Austrittsöffnungen (70, 72) mit mittleren Strömungsrichtungen (97) eingerichtet ist, die ausgehend von einer einem Arbeitsfahrzeug (10) zugewandten oder abgewandten Seite (99, 101) des Arbeitsgeräts (16) mit der Arbeitsrichtung (44) einen Winkel ($\alpha1$, $\alpha2$) einschließen, der mit wachsendem Abstand der Austrittsöffnungen (70, 72) von der dem Arbeitsfahrzeug (10) zugewandten oder abgewandten Seite (99, 101) zunimmt.

6. Geräteanordnung (15) nach Anspruch 1, **dadurch gekennzeichnet, dass** das Blasgerät (18) wenigstens eine Austrittsöffnung (72) für das Austreten der Blasluft hat, die in der Arbeitsrichtung (44) vor dem Wirkabschnitt (36) des Maschinenwerkzeugs (22) und zu diesem seitlich versetzt angeordnet ist.

7. Geräteanordnung (15) nach Anspruch 1, **dadurch gekennzeichnet, dass** das Blasgerät (18) für das Wegblasen von Kleinlebewesen (50) wenigstens eine Austrittsöffnung (72) für das Austreten der Blasluft hat, die neben dem Abschnitt (52) des Arbeitsbereichs positioniert ist, der dem Wirkabschnitt (36) des Maschinenwerkzeugs (22) in der Arbeitsrichtung (44) vorgelagert ist, und die in der Arbeitsrichtung (44) vor dem Wirkabschnitt (36) des Maschinenwerkzeugs (22) angeordnet ist.

8. Geräteanordnung nach einem der Ansprüche 6 oder 7, **dadurch gekennzeichnet, dass** das Blasgerät (18) wenigstens ein Leitmittel für das Leiten einer Blasluftströmung durch die wenigstens eine Austrittsöffnung (70, 72) mit einer quer oder schräg zu der Arbeitsrichtung (44) verlaufenden Strömungsrichtung (97) enthält.

9. Geräteanordnung nach Anspruch 8, **dadurch gekennzeichnet, dass** das wenigstens eine Leitmittel verstellbar ist.

10. Geräteanordnung nach einem der Ansprüche 7 bis 9, **dadurch gekennzeichnet, dass** das Blasgerät (18) einen Blasluftkanal (74) für das Führen der Blasluftströmung zu der wenigstens einen Austrittsöffnung (70, 72) aufweist, der in einer Rohrleitung (66) zu einem Düsenkörper (73) geführt ist, in dem die wenigstens eine Austrittsöffnung (72) ausgebildet ist, wobei der Düsenkörper (73) an die Rohrleitung (66) beweglich angeschlossen ist.

11. Geräteanordnung nach einem der Ansprüche 1 bis 10, **gekennzeichnet durch** einen Halterahmen (20), an dem ein Umlenkgetriebe (38) festgelegt ist, das eine Schnittstelle (14) zum Anschließen einer Gelenkwelle für das Verbinden mit einem Gelenkwellenantrieb eines Arbeitsfahrzeugs (10) hat, das einen ersten mit einem ersten Getriebe für das Antreiben des Maschinenwerkzeugs (22) in dem Arbeitsgerät (16) drehgekoppelten Abtrieb hat und das einen zweiten, mit einem zweiten Getriebe für das Antreiben einer Vorrichtung (54) in dem Blasgerät (18) für das Erzeugen einer Blasluftströmung gekoppelten Abtrieb aufweist, und/oder **gekennzeichnet durch** einen Elektromotor (120) oder einen Hydraulikmotor (93) für das Antreiben einer Vorrichtung (54) in dem Blasgerät (18) für das Erzeugen einer Blasluftströmung und/oder **dadurch gekennzeichnet,** dass das Arbeitsgerät (16) ein Arbeitsgerät aus der Gruppe Mähdrescher, Maishäcksler, Mulchgerät, Mähgerät oder Bodenfräse ist und/oder **dadurch gekennzeichnet, dass** das Blasgerät (18) an einem Halterahmen (20) für das Halten des Maschinenwerkzeugs (22) in dem Arbeitsgerät (16) festgelegt ist.

12. Arbeitsfahrzeug (10) mit einer nach einem der Ansprüche 1 bis 11 ausgebildeten Geräteanordnung (15) für das Bewegen des Wirkabschnitts (36) des Maschinenwerkzeugs (22) des Arbeitsgeräts (16) durch den Arbeitsbereich (46) in der Arbeitsrichtung (44).

13. Arbeitsfahrzeug (10) mit einer nach einem der Ansprüche 1 bis 12 ausgebildeten Geräteanordnung (15) für das Bewegen des Wirkabschnitts (36) des Maschinenwerkzeugs (22) des Arbeitsgeräts (16) durch den Arbeitsbereich (46) in der Arbeitsrichtung (44) mit einem Arbeitsfahrzeugrahmen (19), an dem das Blasgerät (18) bezogen auf die Arbeitsrichtung (44) frontseitig und das Arbeitsgerät (16) heckseitig aufgenommen ist.

14. Verfahren zum Ausführen eines Arbeitsgangs aus der Gruppe Grünpflege, Mähen, Mulchen, Bodenbearbeitung, Raufutterernte, Körnerfruchternte und Spritzen, bei dem ein Maschinenwerkzeug (22), das einen Wirkabschnitt (36) hat, in einer Arbeitsrichtung (44) durch einen Arbeitsbereich (46) bewegt wird, **dadurch gekennzeichnet, dass** für das Wegblasen von Kleinlebewesen (50) aus einem dem Wirkabschnitt (36) des Maschinenwerkzeugs (22) in der Arbeitsrichtung (44) vorgelagerten Abschnitt (52) des Arbeitsbereichs (46) ein gasförmiger Fluidstrom bereitgestellt wird, der den dem Wirkabschnitt (36) des Maschinenwerkzeugs (22) in der Arbeitsrichtung (44) vorgelagerten Abschnitt (52) des Arbeitsbereichs (46) mindestens auf einer der Arbeitsbreite $b_w$ des Maschinenwerkzeugs (22) entsprechenden Breite $b_b$ in einer quer zu der Arbeitsrichtung (44) verlaufenden Richtung überstreicht, die nur zu einer Seite des Arbeitsbereichs (46) weist.

15. Verfahren zum Ausführen eines Arbeitsgangs aus der Gruppe Grünpflege, Mähen, Mulchen, Bodenbearbeitung, Raufutterernte, Körnerfruchternte und Spritzen, bei dem ein Maschinenwerkzeug (22), das einen Wirkabschnitt (36) hat, in einer Arbeitsrichtung (44) durch einen Arbeitsbereich (46) bewegt wird, **dadurch gekennzeichnet, dass** für das Wegblasen von Kleinlebewesen (50) aus einem dem Wirkabschnitt (36) des Maschinenwerkzeugs (22) in der Arbeitsrichtung (44) vorgelagerten Abschnitt (52) des Arbeitsbereichs (46) ein gasförmiger Fluidstrom bereitgestellt wird, der in dem dem Wirkabschnitt (36) des Maschinenwerkzeugs (22) in der Arbeitsrichtung (44) vorgelagerten Abschnitt (52) des Arbeitsbereichs (46) eine mittlere Strömungsgeschwindigkeit v hat, für die gilt: 100 m/s ≤ v ≤ 300 m/s, bevorzugt 150 m/s ≤ v ≤ 260 m/s.

**Claims**

1. Apparatus arrangement (15) comprising a working apparatus (16) having a machine tool (22) for a working operation from the group consisting of maintenance of green areas, mulching, mowing, soil cultivation, roughage harvesting, grain harvesting and spraying, which machine tool has an active portion (36) movable in a working direction (44) through a working region (46) of the working apparatus, and

   comprising a blowing apparatus (18) for providing blowing air in a portion (52) of the working region (46) upstream of the active portion (36) of the machine tool (22) in the working direction (44),
   **characterized in that**
   the blowing air for blowing away small creatures (50) covers, in a direction (32) running transversely to the working direction (44) and pointing only to one side of the working region (46), the portion (52) of the working region (46) of the working apparatus (16) upstream of the active portion (36) of the machine tool (22) in the working direction (44) at least on one width b_b corresponding to the working width b_w of the machine tool (22).

2. Apparatus arrangement according to claim 1, **characterized in that** the blowing apparatus (18) comprises a blowing air register (68) having a plurality of outlet openings (70, 72) for the outflow of the blowing air into the portion (52) of the working region (46) of the working apparatus (16) upstream of the active portion (36) of the machine tool (22) in the working direction (44).

3. Apparatus arrangement according to claim 1, **characterized in that** the blowing apparatus (18) for blowing away small creatures (50) contains a fan comprising a housing having an intake opening (62) for sucking in the blowing air and having a fan outlet opening (63) which is connected by means of a pipe (66) to a blowing air register (68) having a plurality of outlet openings (70, 72) for the outflow of the blowing air into the portion (52) of the working region (46) of the working apparatus (16) which is located ahead of the active portion (36) of the machine tool (22) in the working direction (44).

4. Apparatus arrangement (15) according to claim 2 or claim 3, **characterized in that** the blowing air register (68) can, in order to set the direction of the blowing air being emitted from the at least one outlet opening (70, 72), be adjusted relative to the working apparatus (16), and/or **in that** the blowing apparatus (18) contains at least one guide means for guiding the blowing air flow through at least one of the outlet openings (70, 72) having a mean flow direction (97) running transversely or obliquely to the working direction (44), and/or **in that** the blowing apparatus (18) is configured to provide the blowing air for blowing away small creatures (50) through different outlet openings (70, 72) having mean flow directions (97) which, starting from a side (99, 101) of the working apparatus (16) facing or facing away from a working vehicle (10) having the working direction (44) enclose an angle (α1, α2) which increases as the distance of the outlet openings (70, 72) from the side (99, 101) facing or facing away from the working vehicle (10) increases.

5. Apparatus arrangement (15) comprising a working apparatus (16) having a machine tool (22) for a working operation from the group consisting of maintenance of green areas, mulching, mowing, soil cultivation, roughage harvesting, grain harvesting and spraying, which machine tool has an active portion (36) movable in a working direction (44) through a working region (46) of the working apparatus, and

   comprising a blowing apparatus (18) for providing blowing air in a portion (52) of the working region (46) upstream of the active portion (36) of the machine tool (22) in the working direction (44),
   **characterized in that**
   the blowing apparatus (18) is configured to provide the blowing air for blowing away small creatures (50) through different outlet openings (70, 72) having mean flow directions (97) which, starting from a side (99, 101) of the working apparatus (16) facing or facing away from a working vehicle (10) having the working direction (44) enclose an angle (α1, α2) which increases as the distance of the outlet openings (70, 72) from the side (99, 101) facing or facing away from the working vehicle (10) increases.

6. Apparatus arrangement (15) according to claim 1, **characterized in that** the blowing apparatus (18) comprises at least one outlet opening (72) for the emission of the blowing air, which outlet opening is arranged in the working direction (44) in front of the active portion (36) of the machine tool (22) and laterally offset therefrom.

7. Apparatus arrangement (15) according to claim 1,

**characterized in that**
the blowing apparatus (18) for blowing away small creatures (50) comprises at least one outlet opening (72) for the emission of the blowing air, which outlet opening is positioned next to the portion (52) of the working region that is upstream of the active portion (36) of the machine tool (22) in the working direction (44), and which outlet opening is arranged upstream of the active portion (36) of the machine tool (22) in the working direction (44).

8. Apparatus arrangement according to either of claims 6 or 7, **characterized in that** the blowing apparatus (18) contains at least one guide means for guiding a blowing air flow through the at least one outlet opening (70, 72) having a flow direction (97) running transversely or obliquely to the working direction (44).

9. Apparatus arrangement according to claim 8, **characterized in that** that at least one guide means is adjustable.

10. Apparatus arrangement according to any of claims 7 to 9, **characterized in that** the blowing apparatus (18) comprises a blowing air channel (74) for guiding the blowing air flow to the at least one outlet opening (70, 72), which channel is guided in a pipe (66) to a nozzle body (73) in which the at least one outlet opening (72) is formed, the nozzle body (73) being movably connected to the pipe (66).

11. Apparatus arrangement according to any of claims 1 to 10, **characterized by** a holding frame (20) to which a deflection gear (38) is fixed, the deflection gear comprising an interface (14) for connecting a cardan shaft for connection to a cardan shaft drive of a working vehicle (10) having a first drive rotationally coupled to a first gear for driving the machine tool (22) in the working apparatus (16) and having a second drive coupled to a second gear for driving a device (54) in the blowing apparatus (18) in order to generate a blowing air flow, and/or **characterized by** an electric motor (120) or a hydraulic motor (93) for driving a device (54) in the blowing apparatus (18) in order to generate a blowing air flow, and/or **characterized in that** the working apparatus (16) is a working apparatus from the group consisting of combine harvester, maize chopper, mulcher, mower or tiller, and/or **characterized in that** the blowing apparatus (18) is fixed to a holding frame (20) for holding the machine tool (22) in the working apparatus (16).

12. Working vehicle (10) comprising an apparatus arrangement (15) designed according to any of claims 1 to 11 for moving the active portion (36) of the machine tool (22) of the working apparatus (16) through the working region (46) in the working direction (44).

13. Working vehicle (10) comprising an apparatus arrangement (15) designed according to any of claims 1 to 12 for moving the active portion (36) of the machine tool (22) of the working apparatus (16) through the working region (46) in the working direction (44), and comprising a working vehicle frame (19) on which, with respect to the working direction (44), the blowing apparatus (18) is received at the front and the working apparatus (16) is received at the rear.

14. Method for carrying out a working operation from the group consisting of maintenance of green areas, mowing, mulching, soil cultivation, roughage harvesting, grain harvesting and spraying, in which a machine tool (22) having an active portion (36) is moved in a working direction (44) through a working region (46),
**characterized in that**
a gaseous fluid flow is provided for blowing away small creatures (50) from a portion (52) of the working region (46) upstream of the active portion (36) of the machine tool (22) in the working direction (44), which flow covers, in a direction running transversely to the working direction (44) and pointing only to one side of the working region (46), the portion (52) of the working region (46) upstream of the active portion (36) of the machine tool (22) in the working direction (44) at least on one width bb corresponding to the working width bw of the machine tool (22).

15. Method for carrying out a working operation from the group consisting of maintenance of green areas, mowing, mulching, soil cultivation, roughage harvesting, grain harvesting and spraying, in which a machine tool (22) having an active portion (36) is moved in a working direction (44) through a working region (46),
**characterized in that**
a gaseous fluid flow is provided for blowing away small creatures (50) from a portion (52) of the working region (46) upstream of the active portion (36) of the machine tool (22) in the working direction (44), which flow has an average flow velocity v in the portion (52) of the working region (46) upstream of the active portion (36) of the machine tool (22) in the working direction (44), for which the following applies: 100 m/s ≤ v ≤ 300 m/s, preferably 150 m/s ≤ v ≤ 260 m/s.

**Revendications**

1. Agencement d'appareils (15) comportant un appareil de travail (16) qui présente un outil de machine (22) pour un processus de travail du groupe comprenant entretien des espaces verts, broyage, fauchage, travail du sol, récolte de fourrage grossier, récolte de grains et pulvérisation, lequel outil de machine possède une section active (36) pouvant être déplacée dans une direction de travail (44) à travers une zone de travail (46) de l'appareil de travail, et

comportant un appareil de soufflage (18) permettant de fournir de l'air de soufflage dans une section (52) de la zone de travail (46) montée en amont de la section active (36) de l'outil de machine (22) dans la direction de travail (44), **caractérisé en ce que**
l'air de soufflage pour l'expulsion par soufflage de petits organismes (50) balaye la section (52) de la zone de travail (46) de l'appareil de travail (16) montée en amont de la section active (36) de l'outil de machine (22) dans la direction de travail (44), au moins sur une largeur $b_b$ correspondant à la largeur de travail $b_w$ de l'outil de machine (22) dans une direction (32) s'étendant transversalement à la direction de travail (44) et orientée uniquement vers un côté de la zone de travail (46).

2. Agencement d'appareils selon la revendication 1, **caractérisé en ce que** l'appareil de soufflage (18) possède un registre d'air de soufflage (68) qui présente plusieurs ouvertures de sortie (70, 72) pour l'écoulement de l'air de soufflage dans la section (52) de la zone de travail (46) de l'appareil de travail (16) montée en amont de la section active (36) de l'outil de machine (22) dans la direction de travail (44).

3. Agencement d'appareils selon la revendication 1, **caractérisé en ce que**
l'appareil de soufflage (18) pour l'expulsion par soufflage de petits organismes (50) comprend une soufflante comportant un boîtier qui possède une ouverture d'aspiration (62) pour l'aspiration de l'air de soufflage et qui présente une ouverture de sortie de soufflante (63) qui est raccordée au moyen d'une conduite (66) à un registre d'air de soufflage (68) qui présente plusieurs ouvertures de sortie (70, 72) pour l'écoulement de l'air de soufflage dans la section (52) de la zone de travail (46) de l'appareil de travail (16) montée en amont de la section active (36) de l'outil de machine (22) dans la direction de travail (44).

4. Agencement d'appareils (15) selon la revendication 2 ou 3, **caractérisé en ce que** le registre d'air de soufflage (68) peut être déplacé par rapport à l'appareil de travail (16) pour le réglage de la direction de l'air de soufflage sortant de l'au moins une ouverture de sortie (70, 72), **et/ou en ce que** l'appareil de soufflage (18) comprend au moins un moyen de guidage pour le guidage du flux d'air de soufflage à travers au moins l'une des ouvertures de sortie (70, 72) avec une direction d'écoulement moyenne (97) s'étendant transversalement ou obliquement par rapport à la direction de travail (44) **et/ou en ce que** l'appareil de soufflage (18) est conçu pour fournir l'air de soufflage pour l'expulsion par soufflage de petits organismes (50) par différentes ouvertures de sortie (70, 72) avec des directions d'écoulement moyennes (97) qui, en partant d'un côté (99, 101) de l'appareil de travail (16) tourné vers un véhicule de travail (10) ou opposé à celui-ci, forment avec la direction de travail (44) un angle ($\alpha1$, $\alpha2$) qui augmente avec l'augmentation de la distance des ouvertures de sortie (70, 72) par rapport au côté (99, 101) tourné vers le véhicule de travail (10) ou opposé à celui-ci.

5. Agencement d'appareils (15) comportant un appareil de travail (16) qui présente un outil de machine (22) pour un processus de travail du groupe comprenant entretien des espaces verts, broyage, fauchage, travail du sol, récolte de fourrage grossier, récolte de grains et pulvérisation, lequel outil de machine possède une section active (36) pouvant être déplacée dans une direction de travail (44) à travers une zone de travail (46) de l'appareil de travail, et

comportant un appareil de soufflage (18) permettant de fournir de l'air de soufflage dans une section (52) de la zone de travail (46) montée en amont de la section active (36) de l'outil de machine (22) dans la direction de travail (44), **caractérisé en ce que**
l'appareil de soufflage (18) est conçu pour fournir l'air de soufflage pour l'expulsion par soufflage de petits organismes (50) par différentes ouvertures de sortie (70, 72) avec des directions d'écoulement moyennes (97) qui, en partant d'un côté (99, 101) de l'appareil de travail (16) tourné vers un véhicule de travail (10) ou opposé à celui-ci, forment avec la direction de travail (44) un angle ($\alpha1$, $\alpha2$) qui augmente avec l'augmentation de la distance des ouvertures de sortie (70, 72) par rapport au côté (99, 101) tourné vers le véhicule de travail (10) ou opposé à celui-ci.

6. Agencement d'appareils (15) selon la revendication 1,
**caractérisé en ce que**
l'appareil de soufflage (18) possède au moins une ouverture de sortie (72) pour la sortie de l'air de soufflage, laquelle est disposée dans la direction de travail (44) avant la section active (36) de l'outil de machine (22) et est décalée latéralement par rapport à celle-ci.

7. Agencement d'appareils (15) selon la revendication 1,
**caractérisé en ce que**
l'appareil de soufflage (18) pour l'expulsion par soufflage de petits organismes (50) possède au moins une ouverture de sortie (72) pour la sortie de l'air de soufflage qui est positionnée à côté de la section (52) de la zone de travail montée en amont de la section active (36) de l'outil de machine (22) dans la direction de travail (44), et qui est disposée, dans la direction de travail (44), en amont de la section active (36) de l'outil de machine (22).

8. Agencement d'appareils selon l'une des revendications 6 ou 7, **caractérisé en ce que** l'appareil de soufflage (18) comprend au moins un moyen de guidage pour le guidage d'un flux d'air de soufflage à travers l'au moins une ouverture de sortie (70, 72) avec une direction d'écoulement (97) s'étendant transversalement ou obliquement par rapport à la direction de travail (44).

9. Agencement d'appareils selon la revendication 8, **caractérisé en ce que** l'au moins un moyen de guidage est réglable.

10. Agencement d'appareils selon l'une des revendications 7 à 9, **caractérisé en ce que** l'appareil de soufflage (18) présente un canal d'air de soufflage (74) pour le guidage du flux d'air de soufflage vers l'au moins une ouverture de sortie (70, 72), lequel canal est guidé dans une conduite (66) vers un corps de buse (73) dans lequel est formé l'au moins une ouverture de sortie (72), dans lequel le corps de buse (73) est raccordé de manière à être mobile à la conduite (66).

11. Agencement d'appareils selon l'une des revendications 1 à 10, **caractérisé par** un cadre de support (20) sur lequel est fixé un engrenage de renvoi (38) qui possède une interface (14) pour le raccordement d'un arbre de transmission pour la liaison avec un entraînement d'arbre de transmission d'un véhicule de travail (10), qui possède un premier entraînement de sortie accouplé en rotation à un premier engrenage pour l'entraînement de l'outil de machine (22) dans l'appareil de travail (16) et qui possède un second entraînement de sortie accouplé à un second engrenage pour l'entraînement d'un dispositif (54) dans l'appareil de soufflage (18) pour la production d'un flux d'air de soufflage, **et/ou caractérisé par** un moteur électrique (120) ou un moteur hydraulique (93) pour l'entraînement d'un dispositif (54) dans l'appareil de soufflage (18) pour la production d'un flux d'air de soufflage **et/ou caractérisé en ce que** l'appareil de travail (16) est un appareil de travail du groupe comprenant moissonneuses-batteuses, ensileuses à maïs, broyeurs, faucheuses ou fraiseuses de sol **et/ou caractérisé en ce que** l'appareil de soufflage (18) est fixé sur un cadre de support (20) pour le maintien de l'outil de machine (22) dans l'appareil de travail (16).

12. Véhicule de travail (10) comportant un agencement d'appareils (15) réalisé selon l'une des revendications 1 à 11 pour le déplacement de la section active (36) de l'outil de machine (22) de l'appareil de travail (16) à travers la zone de travail (46) dans la direction de travail (44).

13. Véhicule de travail (10) comportant un agencement d'appareils (15) réalisé selon l'une des revendications 1 à 12 pour le déplacement de la section active (36) de l'outil de machine (22) de l'appareil de travail (16) à travers la zone de travail (46) dans la direction de travail (44) comportant un cadre de véhicule de travail (19) sur lequel l'appareil de soufflage (18) est reçu du côté avant et l'appareil de travail (16) est reçu du côté arrière par rapport à la direction de travail (44).

14. Procédé permettant d'effectuer un processus de travail du groupe comprenant entretien des espaces verts, fauchage, broyage, travail du sol, récolte de fourrages grossiers, récolte de grains et pulvérisation, dans lequel un outil de machine (22) qui possède une section active (36) est déplacé dans une direction de travail (44) à travers une zone de travail (46),
**caractérisé en ce que**
pour l'expulsion par soufflage de petits organismes (50) hors d'une section (52) de la zone de travail (46) montée en amont de la section active (36) de l'outil de machine (22) dans la direction de travail (44), un flux de fluide gazeux est fourni, lequel couvre la section (52) de la zone de travail (46) montée en amont de la section active (36) de l'outil de machine (22) dans la direction de travail (44) au moins sur une largeur $b_b$ correspondant à la largeur de travail $b_w$ de l'outil de machine (22) dans une direction s'étendant transversalement à la direction de travail (44) et dirigée uniquement vers un côté de la zone de travail (46).

15. Procédé permettant d'effectuer un processus de travail du groupe comprenant entretien des espaces verts, fauchage, broyage, travail du sol, récolte de fourrages grossiers, récolte de grains et pulvérisation, dans lequel un outil de machine (22) qui possède une section active (36) est déplacé dans une direction de travail (44) à travers une zone de travail (46),
**caractérisé en ce que**
pour l'expulsion par soufflage de petits organismes (50) hors d'une section (52) de la zone de travail (46) montée en amont de la section active (36) de l'outil de machine (22) dans la direction de travail (44), un flux de fluide gazeux est fourni, lequel possède une vitesse d'écoulement moyenne v dans la section (52) de la zone de travail (46) montée en amont de la section active (36) de l'outil de machine (22) dans la direction de travail (44), pour laquelle vitesse s'applique : 100 m/s $\leq$ v $\leq$ 300 m/s, de préférence 150 m/s $\leq$ v $\leq$ 260 m/s.

Fig.1

EP 4 054 312 B1

Fig.2

Fig.3

Fig.4

Fig.5

Fig.6

EP 4 054 312 B1

Fig.7

Fig.8

Fig.9

Fig.10

Fig.11

Fig.12

Fig.13

Fig.14

Fig.15a

Fig.15b

Fig.16

Fig.17

Fig.18

EP 4 054 312 B1

Fig.19

EP 4 054 312 B1

Fig.20

EP 4 054 312 B1

Fig.21

Fig.22

Fig.23

EP 4 054 312 B1

EP 4 054 312 B1

Fig.24

Fig.25

Fig.26

Fig.27

Fig.28

Fig.29

**EP 4 054 312 B1**

**IN DER BESCHREIBUNG AUFGEFÜHRTE DOKUMENTE**

**In der Beschreibung aufgeführte Patentdokumente**

- US 20150096277 A1
- US 8579058 B1
- DE 202015006431 U1